(19) Europäisches Patentamt
European Patent Office
Office européen des brevets

(11) EP 4 624 502 A1

(12) **EUROPEAN PATENT APPLICATION**
published in accordance with Art. 153(4) EPC

(43) Date of publication:
**01.10.2025 Bulletin 2025/40**

(21) Application number: **23895092.7**

(22) Date of filing: **24.11.2023**

(51) International Patent Classification (IPC):
***C08F 210/16*** *(2006.01)* ***C08F 4/6592*** *(2006.01)*
***C08F 4/649*** *(2006.01)* ***C08L 23/10*** *(2006.01)*
***C08L 23/08*** *(2025.01)*

(52) Cooperative Patent Classification (CPC):
**C08F 4/649; C08F 4/6592; C08F 210/16; C08L 23/08; C08L 23/10**

(86) International application number:
**PCT/KR2023/019165**

(87) International publication number:
**WO 2024/112165 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2022 KR 20220160246**
**29.11.2022 KR 20220163034**

(71) Applicant: **LOTTE CHEMICAL CORPORATION**
**Seoul 05551 (KR)**

(72) Inventors:
- **HONG, Younjin**
  **Daejeon 34110 (KR)**
- **LEE, Rai Ha**
  **Daejeon 34110 (KR)**
- **CHAE, Byung Hun**
  **Daejeon 34110 (KR)**
- **LEE, Kyung Yong**
  **Daejeon 34110 (KR)**
- **HUH, Chanhwa**
  **Daejeon 34110 (KR)**
- **PARK, Hui Man**
  **Daejeon 34110 (KR)**
- **MIN, Kyung Dae**
  **Daejeon 34110 (KR)**

(74) Representative: **Germain Maureau**
**12, rue Boileau**
**69006 Lyon (FR)**

(54) **ETHYLENE ALPHA-OLEFIN COPOLYMER, METHOD FOR PREPARING SAME, AND RESIN COMPOSITION AND MOLDED ARTICLE COMPRISING SAME**

(57) The present invention relates to an ethylene alpha-olefin copolymer and a resin composition including the same and, more particularly, to an ethylene alpha-olefin copolymer including an ethylene structural unit and an alpha-olefin structural unit, wherein the ethylene alpha-olefin copolymer includes at least two different elution peaks in a temperature range of 250 K to 430 K in Thermal Gradient Interaction Chromatography (TGIC) analysis, a method for preparing the same, and a resin composition and a molded article including the olefin-based copolymer.

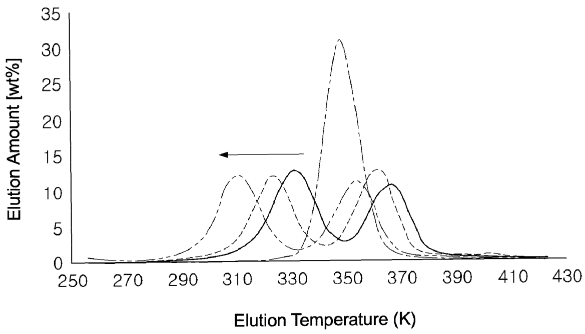


FIG. 1

EP 4 624 502 A1

## Description

## TECHNICAL FIELD

### Cross-reference to Related Applications

The present invention relates to an ethylene alpha-olefin copolymer, a method for preparing the same, and a resin composition and a molded article including the same, and, more particularly, to an ethylene alpha-olefin copolymer having two types of chain distributions and thus exhibiting improved elongation and low-temperature impact strength, a method for preparing the same, and a resin composition and a molded article including the same.

## BACKGROUND ART

As a widely used polymer material, polyolefin has been primarily mixed with ethylene alpha-olefin copolymers to enhance its low-temperature and mechanical properties.

A catalyst of $[Me_2Si(Me_4C_5)NtBu]TiCl_2$ (Constrained-Geometry Catalyst, "CGC") from Dow Chemical Company, used in typical ethylene alpha-olefin copolymerization reactions allows for excellent copolymerization of alpha-olefins with high steric hindrance, such as 1-hexene and 1-octene, and a polymerized olefin-based polymer is known to have a narrow molecular weight distribution (MWD) as well as a single chain structure having a uniform short chain branch distribution.

Meanwhile, the typical ethylene alpha-olefin-based copolymer basically has a single chain structure with a uniform short chain branch distribution, and thus it is known that required physical properties such as compatibility with other resins, processability, strength, and impact strength are hardly achievable in combination.

For example, to improve low-temperature physical properties by compounding an ethylene alpha-olefin copolymer and polypropylene, an ethylene alpha-olefin copolymer having a relatively low density needs to be mixed and used, but when the low-density ethylene alpha-olefin copolymer is mixed in excess, it induces a decrease in the tensile strength of composite resins.

Therefore, there is a need for research on methods to improve the low-temperature and mechanical properties of composite resins without degrading physical properties such as tensile strength.

## DISCLOSURE OF THE INVENTION

## TECHNICAL PROBLEM

An aspect of the present invention provides an ethylene alpha-olefin copolymer including two chain structures with different short chain branch contents using one type of metallocene catalyst in which R-type and S-type steric compounds are co-present, and a method for preparing the same.

Another aspect of the present invention provides a resin composition and a molded article including the copolymer of the present invention and thus exhibiting improved elongation, impact strength, tensile strength, and shrinkage.

## TECHNICAL SOLUTION

According to an aspect of the present invention, provided is an ethylene alpha-olefin copolymer including an ethylene structural unit and an alpha-olefin structural unit, where the ethylene alpha-olefin copolymer includes at least two different elution peaks in a temperature range of 250 K to 430 K in Thermal Gradient Interaction Chromatography (TGIC) analysis.

A method for preparing an ethylene alpha-olefin copolymer according to the present invention includes polymerizing ethylene and at least one olefin-based monomer in the presence of a main catalyst compound containing a transition metal compound represented by Formula 1 below and at least one cocatalyst compound selected from compounds represented by Formulas 2 to 4 below.

[Formula 1]

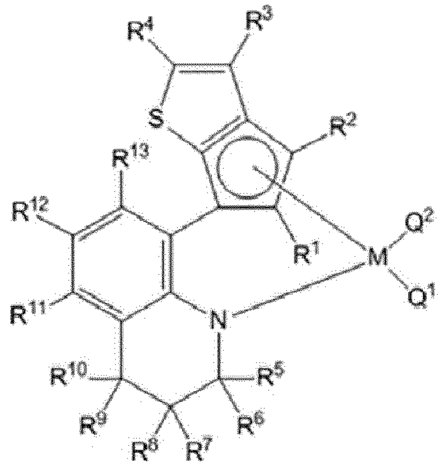

In Formula 1 above,

M is a Group 4 transition metal,
$Q^1$ and $Q^2$ are each independently halogen, $(C_1-C_{20})$ alkyl, $(C_2-C_{20})$ alkenyl, $(C_2-C_{20})$ alkynyl, $(C_6-C_{20})$ aryl, $(C_1-C_{20})$ alkyl$(C_6-C_{20})$aryl, $(C_6-C_{20})$ aryl $(C_1-C_{20})$ alkyl, $(C_1-C_{20})$ alkylamido, $(C_6-C_{20})$ arylamido, or $(C_1-C_{20})$ alkylidene,
$R^1$, $R^2$, $R^3$, $R^4$, $R^5$, $R^6$, $R^7$, $R^8$, $R^9$, and $R^{10}$ are each independently hydrogen; $(C_1-C_{20})$alkyl with or without an acetal, ketal, or ether group; $(C_2-C_{20})$alkenyl with or without an acetal, ketal, or ether group; $(C_1-C_{20})$ alkyl $(C_6-C_{20})$ aryl with or without an acetal, ketal, or ether group; $(C_6-C_{20})$ aryl $(C_1-C_{20})$ alkyl with or without an acetal, ketal, or ether group; or $(C_1-C_{20})$ alkylsilyl with or without an acetal, ketal, or ether group, where $R^1$ and $R^2$ may be connected to form a ring, $R^3$ and $R^4$ may be connected to form a ring, and at least two of $R^5$ to $R^{10}$ may be connected to form a ring, and
$R^{11}$, $R^{12}$, and $R^{13}$ are each independently hydrogen; $(C_1-C_{20})$alkyl with or without an acetal, ketal, or ether group; $(C_2-C_{20})$ alkenyl with or without an acetal, ketal, or ether group; $(C_1-C_{20})$ alkyl $(C_6-C_{20})$ aryl with or without an acetal, ketal, or ether group; $(C_6-C_{20})$ aryl $(C_1-C_{20})$ alkyl with or without an acetal, ketal, or ether group; $(C_1-C_{20})$alkylsilyl with or without an acetal, ketal or ether group; $(C_1-C_{20})$ alkoxy; or $(C_6-C_{20})$ aryloxy, where $R^{11}$ and $R^{12}$ or $R^{12}$ and $R^{13}$ may be connected to form a ring,

[Formula 2] $-[Al(Ra)-O]_n-$

in Formula 2 above,

Ra is each independently halogen; or a $(C_1-C_{20})$ hydrocarbyl group unsubstituted or substituted with halogen, and
n is an integer of 2 or greater,

[Formula 3] $Q(Rb)_3$

in Formula 3 above,

Q is aluminum or boron, and
Rb is each independently halogen; or a $(C_1-C_{20})$ hydrocarbyl group unsubstituted or substituted with halogen, and

[Formula 4] $[W]^+[Z(Rc)_4]^-$

in Formula 4 above,

$[W]^+$ is a cationic Lewis acid or a cationic Lewis acid to which a hydrogen atom is bonded,
Z is a Group 13 element, and
Rc is each independently a $(C_6-C_{20})$ aryl group substituted with one or two or more substituents selected from the group consisting of halogen, a $(C_1-C_{20})$ hydrocarbyl group, an alkoxy group, and a phenoxy

group, or a ($C_1$-$C_{20}$) alkyl group substituted with one or two or more substituents selected from the group consisting of halogen, a ($C_1$-$C_{20}$) hydrocarbyl group, an alkoxy group, and a phenoxy group.

R-type and S-type steric compounds may be co-present in the transition metal compound.

A polypropylene resin composition according to the present invention includes polypropylene, and the ethylene alpha-olefin copolymer described above.

A molded article according to the present invention may be produced from the polypropylene resin composition described above.

## ADVANTAGEOUS EFFECTS

According to the present invention, an ethylene alpha-olefin-based copolymer having two chain structures with different comonomer contents, obtained by using one type of metallocene catalyst has two chain structures with different short chain branch contents. According to the present invention, two polymer chains with different short chain branch contents may be prepared in the same density range, and thus a polymer that entirely includes regions ranging from low to high crystallinity may be synthesized. In this case, it is expected that a polymer chain with high short chain branch content, which is an amorphous or low-crystalline region may improve low-temperature impact strength and tensile elongation, and a polymer chain with low short chain branch content may improve both tensile strength and shrinkage, which may be degraded by an increase in an amorphous or low-crystalline region.

## BRIEF DESCRIPTION OF THE DRAWINGS

FIG. 1 is a graph showing the results of low-temperature Thermal Gradient Interaction Chromatography (TGIC) analysis of each polymer obtained in Examples 1 to 3 and Comparative Example 1.

FIG. 2 is a graph showing a TGIC area ratio according to a catalyst composition ratio of ethylene and 1-octene copolymers prepared in Examples 4 to 6.

## MODE FOR CARRYING OUT THE INVENTION

Hereinafter, preferred embodiments of the present invention will be described with reference to the accompanying drawings. The invention may, however, be embodied in many different forms and should not be construed as being limited to the embodiments set forth herein.

The term "alkyl" described in the present invention means a monovalent linear or branched saturated hydrocarbon radical consisting solely of carbon and hydrogen atoms, and examples of the alkyl radical include, but are not limited to, methyl, ethyl, propyl, isopropyl, butyl, isobutyl, t-butyl, pentyl, hexyl, octyl, dodecyl, cyclopropyl, cyclobutyl, cyclopentyl, cyclohexyl, cycloheptyl, cyclooctyl, cyclononyl, cyclodecyl, and the like.

In addition, the term "alkenyl" described in the present invention means a linear or branched hydrocarbon radical containing at least one carbon-carbon double bond, and includes, but is not limited to, ethenyl, propenyl, butenyl, pentenyl, and the like.

In addition, the term "alkynyl" described in the present invention means a linear or branched hydrocarbon radical containing at least one carbon-carbon triple bond, and includes, but is not limited to, methynyl, ethynyl, propynyl, butynyl, pentynyl, hexynyl, heptynyl, octynyl, and the like.

In addition, the term "aryl" described in the present invention is an organic radical derived from an aromatic hydrocarbon through the removal of one hydrogen, and includes a single or fused ring system. Specific examples of the aryl include, but are not limited to, phenyl, naphthyl, biphenyl, anthryl, fluorenyl, phenanthryl, triphenylenyl, pyrenyl, perylenyl, chrysenyl, naphthacenyl, fluoranthenyl, and the like.

In addition, the term "alkylaryl" described in the present invention means an organic group in which at least one hydrogen of an aryl group is substituted by an alkyl group, and includes, but is not limited to, methylphenyl, ethylphenyl, n-propylphenyl, isopropylphenyl, n-butylphenyl, isobutylphenyl, t-butylphenyl, and the like.

In addition, the term "arylalkyl" described in the present invention means an organic group in which at least one hydrogen of an alkyl group is substituted by an aryl group, and includes, but is not limited to, phenylpropyl, phenylhexyl, and the like.

In addition, as described in the present invention, the term "amido" means an amino group ($-NH_2$) bonded to a carbonyl group (C=O), the term "alkylamido" means an organic group in which at least one hydrogen in $-NH_2$ of the amido group is substituted with an alkyl group, and the term "arylamido" means an organic group in which at least one hydrogen in $-NH_2$ of the amido group is substituted with an aryl group, and the alkyl group in the alkylamido group and the aryl group in

the arylamido group may be the same as, but are not limited to, the examples of the alkyl group and aryl group described above.

In addition, the term "alkylidene" described in the present invention means a divalent aliphatic hydrocarbon group in which two hydrogen atoms are removed from the same carbon atom of an alkyl group, and includes, but is not limited to, ethylidene, propylidene, isopropylidene, butylidene, pentylidene, and the like.

In addition, the term "acetal" described in the present invention means an organic group formed by a bond between alcohol and aldehyde, that is, a substituent having two ether (-OR) bonds on one carbon, and includes, but is not limited to, methoxymethoxy, 1-methoxyethoxy, 1-methoxypropyloxy, 1-methoxybutyloxy, 1-ethoxyethoxy, 1-ethoxypropyloxy, 1-ethoxybutyloxy, 1-(n-butoxy)ethoxy, 1-(iso-butoxy)ethoxy, 1-(sec-butoxy)ethoxy, 1-(tert-butoxy)ethoxy, 1-(cyclohexyloxy)ethoxy, 1-methoxy-1-methylmethoxy, 1-methoxy-1-methylethoxy, and the like.

In addition, the term "ether" described in the present invention is an organic group having at least one ether bond (-O-), and includes, but is not limited to, 2-methoxyethyl, 2-ethoxyethyl, 2-butoxyethyl, 2-phenoxyethyl, 2-(2-methoxyethoxy)ethyl, 3-methoxypropyl, 3-butoxypropyl, 3-phenoxypropyl, 2-methoxy-1-methylethyl, 2-methoxy-2-methylethyl, 2-methoxyethyl, 2-ethoxyethyl, 2-butoxyethyl, 2-phenoxyethyl, and the like.

In addition, the term "silyl" described in the present invention means a $-SiH_3$ radical derived from silane, and at least one of the hydrogen atoms in the silyl group may be substituted with various organic groups such as alkyl and halogen, and specifically includes, but is not limited to, trimethylsilyl, triethylsilyl, t-butyldimethylsilyl, vinyldimethylsilyl, propyldimethylsilyl, triphenylsilyl, diphenylsilyl, phenylsilyl, trimethoxysilyl, methyldimethoxysilyl, ethyldiethoxysilyl, triethoxysilyl, vinyldimethoxysilyl, triphenoxysilyl, and the like.

In addition, the term "alkoxy" described in the present invention means an -O-alkyl radical, where 'alkyl' is as defined above. Examples of the alkoxy radical include, but are not limited to, methoxy, ethoxy, propoxy, isopropoxy, butoxy, isobutoxy, t-butoxy, and the like.

In addition, the term "halogen" described in the present invention means a fluorine, chlorine, bromine, or iodine atom.

In addition, the term "$C_n$" described in the present invention means n carbon atoms.

The present invention provides an ethylene alpha-olefin copolymer having two chains with different short chain branch contents, using one type of metallocene catalyst, achieved by catalyst isomers. That is, the present invention may provide an ethylene alpha-olefin-based copolymer having two chain structures with different short chain branch contents using one type of metallocene catalyst, and a composition including the same.

In particular, the copolymer of the present invention includes two polymer chains with different branch chain contents within the same density range, encompassing regions ranging from low to high crystallinity, and polymer chains with high branch chain content, which are amorphous or low-crystalline regions, may improve low-temperature impact strength and tensile elongation, and polymer chains with low branch chain content may simultaneously improve tensile strength and shrinkage, which may be degraded by an increase in amorphous or low-crystalline regions.

That is, the ethylene alpha-olefin copolymer prepared in the present invention is an ethylene alpha-olefin copolymer containing an ethylene structural unit and an alpha-olefin structural unit, and when analyzed using Thermal Gradient Interaction Chromatography (TGIC), it is determined that the copolymer is eluted at two different temperatures, and accordingly, two chain structures having different short chain branch contents are formed.

The present invention provides an ethylene alpha-olefin-based copolymer, which is an olefin-based copolymer including at least two different elution peaks in a temperature range of 250 K to 430 K in Thermal Gradient Interaction Chromatography (TGIC) analysis.

More specifically, the ethylene alpha-olefin copolymer according to the present invention has a multimodal Thermal Gradient Interaction Chromatography (TGIC) distribution. In the TGIC analysis, the low-crystalline region of the copolymer has high polymer mobility and thus has a low elution temperature, and the high-crystalline region has low polymer mobility and thus has a high elution temperature, and accordingly, when the low-crystalline region and the high-crystalline region are co-present, there are two or more elution sections. Therefore, the resin composition formed by mixing the ethylene alpha-olefin copolymer according to the present invention with a polyolefin may have improved impact strength due to the low-crystalline region of the ethylene alpha-olefin copolymer. In addition, the high-crystalline region of the ethylene alpha-olefin copolymer prevents a decrease in tensile strength due to an increase in the low-crystalline region in the resin composition, thereby providing a resin composition having sufficient tensile strength and impact strength.

According to an aspect of the present invention, provided is an ethylene alpha-olefin copolymer including an ethylene structural unit and an alpha-olefin structural unit, where the ethylene alpha-olefin copolymer includes a first elution temperature and a second elution temperature in Thermal Gradient Interaction Chromatography (TGIC) analysis when including at least two different elution peaks, and a difference between the first elution temperature and the second elution temperature is 10 to 60 K.

The alpha-olefin may be an aliphatic alpha-olefin of $C_2$-$C_{12}$ or $C_2$-$C_8$. More specifically, the alpha-olefin may be propylene, 1-butene, 1-pentene, 3-methyl-1-butene, 1-hexene, 4-methyl-1-pentene, 3-methyl-1-pentene, 1-heptene, 1-octene, 1-decene, 1-undecene, 1-dodecene, 1-tetradecene, 1-hexadecene, 1-eicosene, 4,4-dimethyl-1-pentene, 4,4-diethyl-1-hexene, 3,4-dimethyl-1-hexene, or the like, and any one thereof or a mixture of two or more thereof may be used.

Physical properties may vary depending on a ratio of an ethylene structural unit and an alpha-olefin structural unit present in the ethylene alpha-olefin copolymer.

The ratio of the ethylene structural unit and the alpha-olefin structural unit in the ethylene alpha-olefin copolymer is not particularly limited, but a weight ratio of the ethylene structural unit and the alpha-olefin structural unit in the ethylene alpha-olefin copolymer may be 1:0.1 to 1:1, preferably 1:0.15 to 1:0.75.

When the alpha-olefin structural unit content is lower than the above range, the effects of improving tensile elongation, low-temperature impact strength, and shrinkage are insignificant, and when the alpha-olefin structural unit content exceeds the above range, stickiness may occur between products, which may result in reduced workability.

In the present invention, the first elution temperature may be calculated through Equation 1 below.

$$-2.5 \times (\text{alpha-olefin monomer content}) + 132.5 \quad \ldots \text{Equation 1}$$

Meanwhile, an elution polymer from the first elution temperature satisfies the following Equation.

$$1)\ SCB = 2.5429 \times (\text{alpha-olefin content}) + 6.9429$$

$$2)\ Mw = [10.151 \times (\text{alpha-olefin content}) + 198.09] * 1000 \qquad 2)$$

An increase in alpha-olefin content may result in a decrease in the first elution temperature and an improvement in mechanical properties.

Meanwhile, for example, the first elution temperature may be 310 to 345 K, and the second elution temperature may be 350 to 380 K, and in this case, a ratio of an amount of elution at the first elution temperature and an amount of elution at the second elution temperature may be 0.5 to 7.3 or 0.7 to 2, for example, 0.76 to 1.9.

In addition, for example, the ratio of the first elution temperature and the second elution temperature may be 0.5 to 0.91, for example, 0.55 to 0.91.

In the present invention, polymerization of ethylene and alpha-olefin may be performed under a catalyst composition including R-type and S-type transition metal compounds represented by Formula 1 below.

[Formula 1]

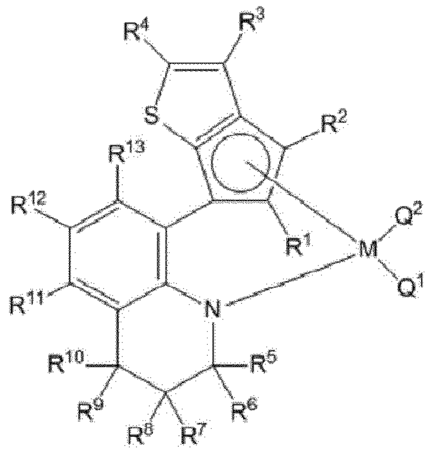

In Formula 1 above,

M is a Group 4 transition metal,
$Q^1$ and $Q^2$ are each independently halogen, $(C_1\text{-}C_{20})$ alkyl, $(C_2\text{-}C_{20})$ alkenyl, $(C_2\text{-}C_{20})$ alkynyl, $(C_6\text{-}C_{20})$ aryl, $(C_1\text{-}C_{20})$ alkyl $(C_6\text{-}C_{20})$ aryl, $(C_6\text{-}C_{20})$ aryl $(C_1\text{-}C_{20})$ alkyl, $(C_1\text{-}C_{20})$ alkylamido, $(C_6\text{-}C_{20})$ arylamido, or $(C_1\text{-}C_{20})$ alkylidene,
$R^1$, $R^2$, $R^3$, $R^4$, $R^5$, $R^6$, $R^7$, $R^8$, $R^9$, and $R^{10}$ are each independently hydrogen; $(C_1\text{-}C_{20})$alkyl with or without an acetal, ketal, or ether group; $(C_2\text{-}C_{20})$alkenyl with or without an acetal, ketal, or ether group; $(C_1\text{-}C_{20})$ alkyl $(C_6\text{-}C_{20})$ aryl with or without an acetal, ketal, or ether group; $(C_6\text{-}C_{20})$ aryl $(C_1\text{-}C_{20})$ alkyl with or without an acetal, ketal, or ether group; or

$(C_1-C_{20})$alkylsilyl with or without an acetal, ketal, or ether group, where R1 and $R^2$ may be connected to form a ring, $R^3$ and $R^4$ may be connected to form a ring, and at least two of $R^5$ to $R^{10}$ may be connected to form a ring, and $R^{11}$, $R^{12}$, and $R^{13}$ are each independently hydrogen; $(C_1-C_{20})$alkyl with or without an acetal, ketal, or ether group; $(C_2-C_{20})$ alkenyl with or without an acetal, ketal, or ether group; $(C_1-C_{20})$ alkyl $(C_6-C_{20})$ aryl with or without an acetal, ketal, or ether group; $(C_6-C_{20})$aryl $(C_1-C_{20})$ alkyl with or without an acetal, ketal, or ether group; $(C_1-C_{20})$alkylsilyl with or without an acetal, ketal or ether group; $(C_1-C_{20})$ alkoxy; or $(C_6-C_{20})$aryloxy, where $R^{11}$ and $R^{12}$ may be connected to form a ring, and $R^{12}$ and $R^{13}$ may be connected to form a ring.

The transition metal compound represented by Formula 1 includes a new structural ligand in which an amido ligand and ortho-phenylene form a condensed ring, and a pentagonal ring pi-ligand bonded to the ortho-phenylene is fused by a thiophene heterocycle. Accordingly, the transition metal compound has a greater copolymerization activity of ethylene and alpha-olefin than a transition metal compound in which a thiophene hetero ring is not fused.

According to the present invention, in the transition metal compound represented by Formula 1 above, $R^1$, $R^2$, $R^3$, $R^4$, $R^5$, $R^6$, $R^7$, $R^8$, $R^9$, $R^{10}$, $R^{11}$, $R^{12}$, and $R^{13}$ may each independently be substituted with a substituent including an acetal, ketal, or ether group, and when substituted with the above-described substituent, it may be more desirable to support the transition metal compound on a surface of a carrier.

In addition, in the transition metal compound represented by Formula 1 above, M may be titanium (Ti), zirconium (Zr), or hafnium (Hf).

In addition, in the transition metal compound represented by Formula 1 above, preferably, $Q^1$ and $Q^2$ are each independently halogen or $(C_1-C_{20})$ alkyl, and more preferably, may be chlorine or methyl.

In addition, in the transition metal compound represented by Formula 1 above, $R^1$, $R^2$, $R^3$, $R^4$, and $R^5$ may each independently be hydrogen or $(C_1-C_{20})$ alkyl, and preferably, may each independently be hydrogen or methyl. More preferably, $R^1$, $R^2$, $R^3$, $R^4$, and $R^5$ may each independently be hydrogen or methyl, where at least one of $R^3$ or $R^4$ may be methyl, and $R^5$ may be methyl.

In addition, in the transition metal compound represented by Formula 1 above, preferably, $R^6$, $R^7$, $R^8$, $R^9$, $R^{10}$, $R^{11}$, $R^{12}$, and $R^{13}$ are each hydrogen.

The transition metal compound represented by Formula 1 above preferably includes the substituents described above to control electronic and steric environment around the metal.

Meanwhile, the transition metal compound represented by Formula 1 above may be obtained from a precursor compound represented by Formula 5 below:

[Formula 5]

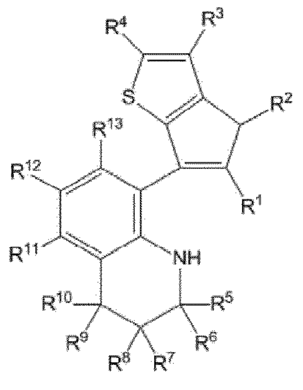

In Formula 5 above, $R^1$, $R^2$, $R^3$, $R^4$, $R^5$, $R^6$, $R^7$, $R^8$, $R^9$, $R^{10}$, $R^{11}$, $R^{12}$, and $R^{13}$ are each as defined in Formula 1 above.

In this case, the precursor compound represented by Formula 5 above may be prepared through a method including (i) subjecting a tetrahydroquinoline derivative represented by Formula 6 below to a reaction with alkyl lithium and then adding carbon dioxide to prepare a compound represented by Formula 7, and (ii) subjecting the compound represented by Formula 7 above to a reaction with alkyl lithium, then adding a compound represented by Formula 8 below, and treating the mixture with acid:

[Formula 6]

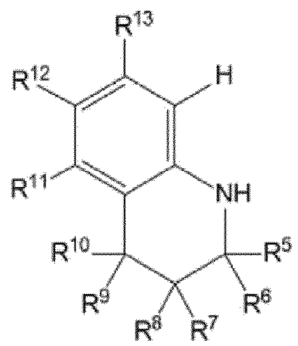

Formula 7]

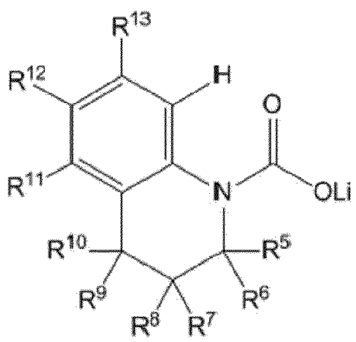

[Formula 8]

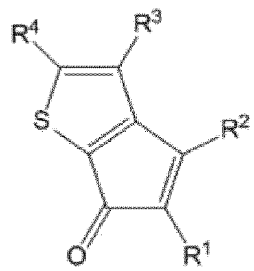

In Formulas 6, 7, and 8 above, $R^1$, $R^2$, $R^3$, $R^4$, $R^5$, $R^6$, $R^7$, $R^8$, $R^9$, $R^{10}$, $R^{11}$, $R^{12}$, and $R^{13}$ are each as defined in Formula 1 above.

However, in Formulas 6, 7, and 8 above, $R^1$, $R^2$, $R^3$, $R^4$, and $R^5$ may each independently be hydrogen or $(C_1\text{-}C_{20})$ alkyl, and preferably, may each independently be hydrogen or methyl. More preferably, $R^1$, $R^2$, $R^3$, $R^4$, and $R^5$ may each independently be hydrogen or methyl, where at least one of $R^3$ or $R^4$ may be methyl, and $R^5$ may be methyl. In addition, preferably, $R^6$, $R^7$, $R^8$, $R^9$, $R^{10}$, $R^{11}$, $R^{12}$, and $R^{13}$ are each hydrogen. Thereby, accessibility and reactivity of a starting material thereof may be secured, and it is desirable to control electronic and steric environment of the transition metal compound of Formula 1 to be prepared.

In the preparation of the precursor compound represented by Formula 5, step (i) above is a reaction in which the tetrahydroquinoline derivative represented by Formula 6 above is subjected to a reaction with alkyl lithium and then carbon dioxide is added to convert the mixture into the compound represented by Formula 7 above, which may be performed according to a method described in known literature (Tetrahedron Lett. 1985, 26, 5935; Tetrahedron 1986 ,42, 2571; J.Chem.SC.Perkin Trans. 1989, 16).

In addition, in step (ii) above, the compound represented by Formula 7 above is subjected to a reaction with alkyl lithium to induce a deprotonation reaction so as to produce an ortho-lithium compound, and the produced ortho-lithium compound is subjected to a reaction with the compound represented by Formula 8 and the resulting product is treated with acid, and thus the transition metal compound precursor represented by Formula 5 above may be obtained.

The reaction of subjecting the compound represented by Formula 7 above to a reaction with alkyl lithium to

produce an ortho-lithium compound may be identified through known literature (Organometallics 2007, 27, 6685; Korean Patent Publication No. 2008-0065868), and in the present invention, by subjecting the ortho-lithium compound to a reaction with the compound represented by Formula 8 above and the resulting product is treated with an acid, and thus the transition metal compound precursor represented by Formula 5 above may be obtained.

In this case, the compound represented by Formula 8 above may be prepared through various known methods. Reaction Formula 1 below shows an example thereof, which may be prepared through a single-step reaction, and also allows for easy and economical preparation of the transition metal compound precursor of the present invention by using inexpensive starting materials (J. Organomet. Chem., 2005, 690, 4213).

[Reaction Formula 1]

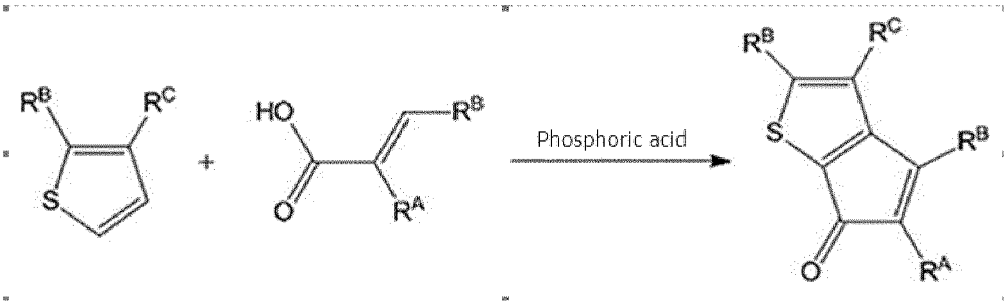


Meanwhile, various known methods may be used to synthesize the transition metal compound represented by Formula 1 above from the precursor compound represented by Formula 5 above obtained through the above method. The compound may be prepared through a method in which about 2 equivalents of alkyl lithium is added to the precursor compound represented by Formula 5 above to induce a deprotonation reaction so as to prepare a dilithium compound of cyclopentadienyl anion and amide anion, and then $(Q^1)$ $(Q^2)MCl_2$ is added to remove about 2 equivalents of LiCl.

In addition, the compound represented by Formula 5 above may be subjected to a reaction with a $M(NMe_2)_4$ compound to remove about 2 equivalents of $HNMe_2$ so as to obtain a transition metal compound represented by Formula 1 in which $Q^1$ and $Q^2$ are both $NMe_2$, and then the transition metal compound may be subjected to a reaction with $Me_3SiCl$ or $Me_2SiCl_2$ to change a $NMe_2$ ligand into a chlorine ligand.

The transition metal compound represented by Formula 1 prepared through the above process includes R-type and S-type, and thus when a polymerization reaction is performed under a catalyst composition including both of these structures, two types of polymers having different structures and physical properties may be formed.

This is determined to be due to a difference in ethylene conversion rates between the R-type and the S-type. The R-type and the S-type have similar comonomer conversion rates, but may have different ethylene conversion rates due to a difference in steric structure. Specifically, the S-type, having a greater space for ethylene insertion than the R-type, requires additional energy to form a specific arrangement for a polymerization reaction. Therefore, the S-type exhibits a low ethylene conversion rate, and thus may form a polymer chain having a relatively high comonomer content and a thin lamella thickness. Conversely, the R-type exhibits a high ethylene conversion rate, and may form a polymer chain having a relatively low comonomer content and a thick lamella thickness.

As such, in the transition metal compound of the present invention, two steric compounds are co-present, such that polymers having different structures may be produced despite using a single catalyst. As shown in the following structural formula, the transition metal compound of the present invention has two compounds, an S-type steric compound (a) and an R-type steric compound (b), and thus, acts as two catalysts.

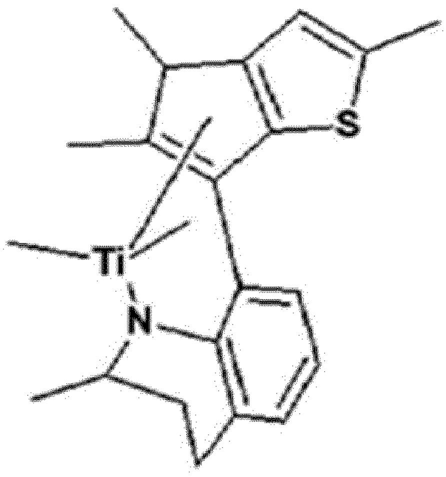

(a) S-type

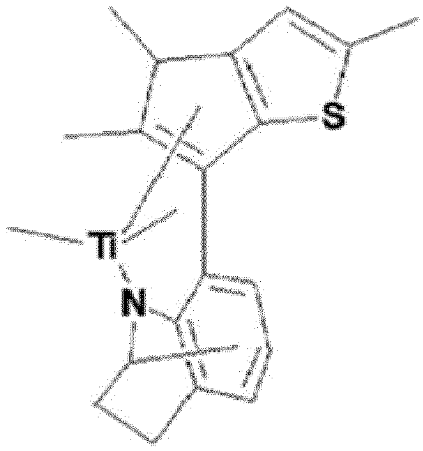

(b) R-type

The R-type steric compound (b) forms a polymer chain containing low comonomer, and the S-type steric compound (a) forms a polymer chain containing high comonomer. The reason is that although the R-type steric compound (b) and the S-type steric compound (a) have similar comonomer conversion rates, the S-type steric compound has a low ethylene conversion rate, and it is determined that the S-type steric compound (a) forms a polymer chain having a relatively high comonomer content.

When the catalyst changes into an active species, the methyl group of Ti is located on the opposite side due to steric hindrance caused by the sulfur (S) element of thiophene. Thereafter, in the case of the R-type steric compound (b), the space into which ethylene is inserted is narrow and rotation is not possible, and therefore, ethylene is placed on the same plane as the methyl group (Me), as shown in the following structural formula showing the insertion structure of the meso-active species ethylene. Consequently, polymerization easily occurs via migration.

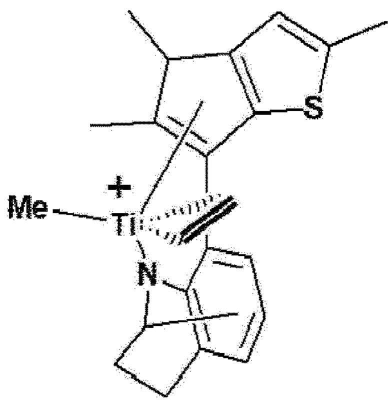

Meanwhile, in case of the S-type steric compound (a), as shown in the following structural formula showing the insertion structure of the racemic active species ethylene, the ethylene insertion space is large, and therefore, ethylene rotates and coordinates with Ti, and requires rotation energy to be placed on the same plane as the methyl group (Me) for polymerization. Therefore, compared to the R-type steric compound (b), the S-type steric compound (a) has a lower ethylene conversion rate.

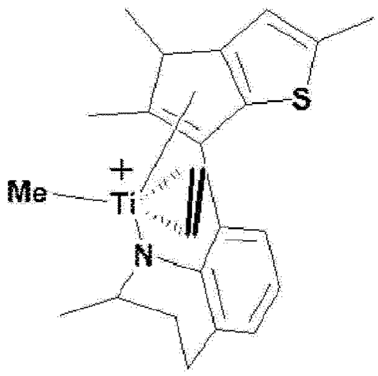

When a comonomer is inserted, a molecular size thereof is larger than that of ethylene, and the S-type steric compound also is placed on the same plane as the methyl group (Me) due to steric hindrance of a ligand, and therefore, it is determined that a comonomer conversion rate of the S-type steric compound (a) is similar to that of the R-type steric compound (b).

To prepare an ethylene alpha-olefin copolymer containing two types of polymer chains having different comonomer contents in the presence of the above catalyst composition, preferably, the R-type and the S-type are present in a molar ratio of 1.5:0.1 to 1:1, for example, 1.1:0.1 to 1:1. When the molar ratio is less than 1.5:0.1, a large amount of low-density polymer chains are formed due to the predominance of the S-type, which may cause stickiness of a product, and when the molar ratio exceeds 1:1, a large amount of high-density polymer chains are formed, resulting in insufficient improvement in tensile elongation and low-temperature impact strength.

In the present invention, the catalyst composition may further include a cocatalyst compound. The cocatalyst compound activates a transition metal compound, and an aluminoxane compound, an organo-aluminum compound, a bulky compound that activates a catalyst composition, or the like may be used. Specifically, the cocatalyst compound may be selected from the group consisting of compounds represented by Formulas 2 to 4 below.

[Formula 2] $-[Al(Ra)-O]_n-$

In Formula 2 above,

Ra is each independently halogen; or a ($C_1$-$C_{20}$) hydrocarbyl group unsubstituted or substituted with halogen, and
n is an integer of 2 or greater.

[Formula 3] $Q(Rb)_3$

In Formula 3 above,

Q is aluminum or boron, and
Rb is each independently halogen; or a ($C_1$-$C_{20}$) hydrocarbyl group unsubstituted or substituted with halogen.

[Formula 4] $[W]^+[Z(Rc)_4]^-$

In Formula 4 above,

$[W]^+$ is a cationic Lewis acid or a cationic Lewis acid to which a hydrogen atom is bonded,
Z is a Group 13 element, and
Rc is each independently a ($C_6$-$C_{20}$) aryl group substituted with one or two or more substituents selected from the group consisting of halogen, a ($C_1$-$C_{20}$) hydrocarbyl group, an alkoxy group, and a phenoxy group, or a ($C_1$-$C_{20}$) alkyl group substituted with one or two or more substituents selected from the group consisting of halogen, a ($C_1$-$C_{20}$) hydrocarbyl group, an alkoxy group, and a phenoxy group.

The cocatalyst compound is contained in the catalyst together with the transition metal compound represented by Formula 1 above and serves to activate the transition metal compound. Specifically, in order for the transition metal compound to become an active catalyst component used in olefin polymerization, a compound containing a unit

represented by Formula 2 above, a compound represented by Formula 3, and a compound represented by Formula 4, which may extract a ligand from the transition metal compound and act as a counterion having a weak binding force, that is, an anion, while cationizing a central metal ($M^1$ or $M^2$), act together as cocatalysts.

The "unit" represented by Formula 2 above is a structure in which n structures within [ ] are connected within a compound. When the compound contains the unit represented by Formula 2, other structures within the compound are not particularly limited, and the compound may be a cluster-type compound in which repeating units of Formula 2 are connected to each other, for example, a spherical compound.

In order for the cocatalyst compound to exhibit a more excellent activation effect, the compound represented by Formula 2 above is not particularly limited as long as it is alkylaluminoxane, but preferred examples of the compound represented by Formula 2 above include methylaluminoxane, ethylaluminoxane, isobutylaluminoxane, and butylaluminoxane, and a particularly preferred compound is methylaluminoxane.

In addition, the compound represented by Formula 3 above is an alkyl metal compound and is not particularly limited, and non-limiting examples thereof include trimethylaluminum, triethylaluminum, triisobutylaluminum, tripropylaluminum, tributylaluminum, dimethylchloroaluminum, triisopropylaluminum, tri-s-butyl aluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolyl aluminum, dimethyl aluminum methoxide, dimethyl aluminum ethoxide, trimethyl boron, triethyl boron, triisobutyl boron, tripropyl boron, and tributyl boron. Considering the activity of the transition metal compound, one or two or more selected from the group consisting of trimethylaluminum, triethylaluminum, and triisobutylaluminum may be preferably used.

Considering the activity of the transition metal compound, the compound represented by Formula 4 is a dimethylanilinium cation when $[W]^+$ is a cationic Lewis acid to which a hydrogen atom is bonded, and $[(C_6H_5)_3C]^+$ when $[W]^+$ is a cationic Lewis acid, and $[Z(Rc)_4]^-$ may be preferably $[B(C_6F_5)4]^-$.

The compound represented by Formula 4 is not particularly limited, but as a non-limiting example of the compound represented by Formula 4 when $[W]^+$ is a cationic Lewis acid to which a hydrogen atom is bonded, one or more selected from the group consisting of triphenylcarbenium borate, trimethylammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradecyclooctadecylammonium tetraphenylborate, N,N-dimethylanilium tetraphenylborate, N,N-diethylanilium tetraphenylborate, N,N-dimethyl(2,4,6-trimethylanilium)tetraphenylborate, trimethylammonium tetrakis(pentafluorophenyl)borate, methylditetradecylammonium tetrakis(pentafluorophenyl)borate, methyldioctadecylammonium tetrakis(pentafluorophenyl)borate, triethylammonium tetrakis(pentafluorophenyl)borate, tripropylammonium tetrakis(pentafluorophenyl)borate, tri(n-butyl)ammonium tetrakis(pentafluorophenyl)borate, tri (sec-butyl) ammonium tetrakis(pentafluorophenyl)borate, N,N-dimethylanilium tetrakis(pentafluorophenyl)borate, N,N-diethylanilium tetrakis(pentafluorophenyl)borate, N,N-dimethyl(2,4,6-trimethylanilium)tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl)ammonium tetrakis(2,3,4,6-tetrafluorophenyl)borate, dimethyl(t-butyl)ammonium tetrakis(2,3,4,6-tetrafluorophenyl)borate, N,N-dimethylanilinium tetrakis(2,3,4,6-tetrafluorophenyl)borate, N,N-diethylanilinium tetrakis(2,3,4,6-tetrafluorophenyl)borate, N,N-dimethyl-(2,4,6-trimethylanilinium)tetrakis-(2,3,4,6-tetrafluorophenyl)borate, dioctadecylammonium tetrakis(pentafluorophenyl)borate, ditetradecylammonium tetrakis(pentafluorophenyl)borate, dicyclohexylammonium tetrakis(pentafluorophenyl)borate, triphenylphosphonium tetrakis(pentafluorophenyl)borate, methyldioctadecylphosphonium tetrakis(pentafluorophenyl)borate, tri(2,6-dimethylphenyl)phosphonium tetrakis(pentafluorophenyl)borate, methyldi(octadecyl)ammonium tetrakis(pentafluorophenyl)borate, methyldi(tetradecyl)-ammonium tetrakis(pentafluorophenyl)borate, triethyl tetrakis(pentafluorophenyl)borate, and dialkylammonium are preferable.

Non-limiting examples of the dialkylammonium may include di- (i-propyl) ammonium tetrakis(pentafluorophenyl) borate, dicyclohexylammonium tetrakis(pentafluorophenyl)borate, or the like.

In addition, as a non-limiting example of the compound represented by Formula 4 when $[W]^+$ is a cationic Lewis acid, at least one selected from the group consisting of trialkylphosphonium, dialkyloxonium, dialkylsulfonium, and carbonium salt are preferable.

Non-limiting examples of the trialkylphosphonium may include triphenylphosphonium tetrakis(pentafluorophenyl)borate, tri(o-tolyl)phosphonium tetrakis(pentafluorophenyl)borate, tri(2,6-dimethylphenyl)phosphonium tetrakis(pentafluorophenyl)borate, or the like.

Non-limiting examples of the dialkyloxonium may include diphenyloxonium tetrakis(pentafluorophenyl)borate, di(o-tolyl)oxonium tetrakis(pentafluorophenyl)borate, di(2,6-dimethylphenyl)oxonium tetrakis(pentafluorophenyl)borate, or the like.

Non-limiting examples of the dialkylsulfonium may include diphenylsulfonium tetrakis(pentafluorophenyl)borate, di(o-tolyl)sulfonium tetrakis(pentafluorophenyl)borate, bis(2,6-dimethylphenyl)sulfonium tetrakis(pentafluorophenyl)borate, or the like.

Non-limiting examples of the carbonium salt may include tropylium tetrakis(pentafluorophenyl)borate, triphenylmethyl carbenium tetrakis(pentafluorophenyl)borate, benzene (diazonium) tetrakis(pentafluorophenyl)borate, or the like.

A catalyst may be prepared using the compounds of Formulas 1 to 4 above, and in this case, the methods provided below as an example may be used as a method for preparing a catalyst.

First, when $Q^1$ and $Q^2$ of the transition metal compound represented by Formula 1 are halogens, there is a method of brining the compound into contact with a compound represented by Formula 2. Second, when $Q^1$ and $Q^2$ in Formula 1 are alkyl radicals, a catalyst may be prepared by bringing the compound into contact with a mixture of a transition metal compound and compounds represented by Formulas 3 and 4, or a catalyst may be prepared by directly adding the compounds represented by Formulas 3 and 4 to a polymerizer.

The amount of the cocatalyst compound added may be determined by considering the amount of the transition metal compound represented by Formula 1 and the amount required to sufficiently activate the main catalyst compound. The content of the cocatalyst compound to 1 mole of the transition metal contained in the transition metal compound represented by Formula 1 may be 1:1 to 100,000, preferably 1:1 to 10,000, and more preferably 1:1 to 5,000, with respect to a molar ratio of the metal contained in the cocatalyst compound.

More specifically, a molar ratio of the compound represented by Formula 2 to the transition metal compound represented by Formula 1 may be preferably 1:10 to 5,000, more preferably 1:50 to 1,000, and most preferably 1:100 to 1,000. When the molar ratio of the compound represented by Formula 2 to the transition metal compound of Formula 1 is less than 1:10, the activation of the transition metal compound may not completely take place due to a significantly small amount of aluminoxane, and when the molar ratio of the compound represented by Formula 2 to the transition metal compound of Formula 1 exceeds 1:5,000, excessive aluminoxane acts as a catalyst poison, which may prevent polymer chains from growing well.

In the second method, when Q of the cocatalyst compound represented by Formula 3 is boron, a molar ratio of the cocatalyst compound to the transition metal compound represented by Formula 1 may be 1:1 to 100, preferably 1:1 to 10, and more preferably 1:1 to 3. In addition, when A of the cocatalyst compound represented by Formula 3 is aluminum, a molar ratio of the cocatalyst compound to the transition metal compound represented by Formula 1 may vary depending on the amount of water in the polymerization system, but may be 1:1 to 1,000, preferably 1:1 to 500, and more preferably 1:1 to 100.

In addition, a molar ratio of the cocatalyst compound represented by Formula 4 to the transition metal compound represented by Formula 1 may be 1:0.5 to 30, preferably 1:0.7 to 20, and more preferably 1:1 to 10. When the ratio of the cocatalyst compound represented by Formula 4 is less than 1:0.5, the amount of activator is relatively small and thus the transition metal compound is not completely activated, which may cause degradation in activity of the catalyst composition to be produced, and when the ratio of the cocatalyst compound represented by Formula 4 exceeds 1:30, the metal compound is completely activated, but the unit cost of the catalyst composition may not be cost-effective or the purity of the polymer to be produced may decrease due to the remaining excess activator.

Meanwhile, the catalyst composition of the present invention including the transition metal compound and the cocatalyst compound described above may further include a carrier. In this case, as the carrier, any carrier formed of inorganic or organic materials used in the preparation of a catalyst in the art to which the present invention pertains may be used without limitation.

According to the present invention, the carrier may be $SiO_2$, $Al_2O_3$, MgO, $MgCl_2$, $CaCl_2$, $ZrO_2$, $TiO_2$, $B_2O_3$, CaO, ZnO, BaO, $ThO_2$, $SiO_2$-$Al_2O_3$, $SiO_2$-MgO, $SiO_2$-$TiO_2$, $SiO_2$-$V_2O_5$, $SiO_2$-$Cr_2O_3$, $SiO_2$-$TiO_2$-MgO, bauxite, zeolite, starch, cyclodextrine, or a synthetic polymer.

Preferably, the carrier, which contains a hydroxy group on a surface thereof, may be at least one selected from the group consisting of silica ($SiO_2$), silica-alumina ($SiO_2$-$Al_2O_3$), and silica-magnesia ($SiO_2$-MgO).

As a method of supporting a catalyst including the transition metal compound (main catalyst compound) and the cocatalyst compound on the carrier, a method of directly supporting the transition metal compound on a dehydrated carrier; a method of pre-treating the carrier with the cocatalyst compound and then supporting the transition metal compound; a method of supporting the transition metal compound on the carrier and then post-treating the supported transition metal compound with the cocatalyst compound; a method of subjecting the transition metal compound to a reaction with the cocatalyst compound and then adding the carrier to subject the mixture to a reaction, and the like may be used.

A solvent that may be used in the supporting method may be an aliphatic hydrocarbon-based solvent, an aromatic hydrocarbon-based solvent, a halogenated aliphatic hydrocarbon-based solvent, or a mixture thereof.

Non-limiting examples of the aliphatic hydrocarbon-based solvent may include pentane, hexane, heptane, octane, nonane, decane, undecane, dodecane, or the like.

Non-limiting examples of the aromatic hydrocarbon-based solvent may include benzene, monochlorobenzene, dichlorobenzene, trichlorobenzene, toluene, or the like.

Non-limiting examples of the halogenated aliphatic hydrocarbon-based solvent may include dichloromethane, trichloromethane, dichloroethane, trichloroethane, or the like.

In addition, it is desirable in terms of efficiency of the supporting process that the supporting method is performed

at a temperature within a range of -70 to 200°C, preferably -50 to 150°C, and more preferably 0 to 100°C.

Meanwhile, in the present invention, an ethylene alpha-olefin polymer produced through a polymerization process performed by direct contact of ethylene and an alpha-olefin comonomer compound may be prepared by polymerization of monomers under conditions in which catalytic sites are relatively insoluble and/or immobilized so that polymer chains are rapidly immobilized according to this information. This immobilization may be performed, for example, by using a solid insoluble catalyst, by performing the polymerization in a medium in which the produced polymer is generally insoluble, and by maintaining polymerization reactants and products at or below the crystallization temperature ($T_c$) of the polymer.

The catalyst described above may be preferably applied to the copolymerization of ethylene and alpha-olefins. Hereinafter, a method for preparing an ethylene alpha-olefin copolymer including copolymerizing ethylene and alpha-olefins in the presence of the catalyst will be described.

A polymerization process of ethylene and alpha-olefins is well known in the art, and includes bulk polymerization, solution polymerization, slurry polymerization, and low pressure gas phase polymerization. A metallocene catalyst is particularly useful in a known form of operation using fixed bed, moving bed, or slurry processes performed in single, series, or parallel reactors.

When the polymerization reaction is performed in a liquid or slurry phase, a solvent, propylene, or ethylene monomer itself may be used as a medium.

Since the catalyst presented in the present invention is present in a homogeneous form in a polymerization reactor, applying the catalyst to a solution polymerization process performed at a temperature equal to or higher than a melting point of the corresponding polymer is preferable. However, as disclosed in U.S. Patent No. 4,752,597, the catalyst may be used in a slurry polymerization or gas phase polymerization process in the form of a heterogeneous catalyst composition obtained by supporting the transition metal compound and the cocatalyst on a porous metal oxide support. Therefore, when the catalyst of the present invention is used with an inorganic carrier or an organic polymer carrier, the catalyst may be applied to a slurry or gas phase process. That is, the transition metal compound and the cocatalyst compound may also be used in a form supported on an inorganic carrier or an organic polymer carrier.

The solvent that may be used in the polymerization reaction may be an aliphatic hydrocarbon-based solvent, an aromatic hydrocarbon-based solvent, a halogenated aliphatic hydrocarbon-based solvent, or a mixture thereof. In this case, non-limiting examples of the aliphatic hydrocarbon-based solvent may include butane, isobutane, pentane, hexane, heptane, octane, nonane, decane, undecane, dodecane, cyclopentane, methylcyclopentane, cyclohexane, and the like. In addition, non-limiting examples of the aromatic hydrocarbon-based solvent may include benzene, monochlorobenzene, dichlorobenzene, trichlorobenzene, toluene, xylene, chlorobenzene, and the like. In addition, non-limiting examples of the halogenated aliphatic hydrocarbon-based solvent may include dichloromethane, trichloromethane, chloroethane, dichloroethane, trichloroethane, 1,2-dichloroethane, and the like.

As described above, the ethylene alpha-olefin copolymer according to the present invention may be prepared by polymerizing ethylene and an alpha-olefin comonomer in the presence of the catalyst composition. In this case, the transition metal compound and the cocatalyst component may be separately added to a reactor, or the respective components may be mixed in advance and then added to the reactor, and mixing conditions such as the order of addition, temperature, and concentration are not particularly limited.

Meanwhile, in the polymerization reaction of the present invention, an amount of the catalyst added may be determined within a range in which the polymerization reaction of monomers may sufficiently occur in a slurry phase, liquid phase, gas phase, or solution process, and therefore is not particularly limited. However, the amount of the catalyst added may be preferably $10^{-8}$ to 1 mol/L, more preferably $10^{-7}$ to $10^{-1}$ mol/L, and even more preferably $10^{-7}$ to $10^{-2}$ mol/L, with respect to a concentration of a central metal (M) in the transition metal compound per unit volume (L) of the monomer.

In addition, the polymerization reaction of the present invention may be a batch type, semi-continuous type, or continuous type reaction, and may preferably be a continuous reaction.

The temperature condition for the polymerization reaction of the present invention may be determined in consideration of the efficiency of the polymerization reaction depending on the type of reaction and the type of reactor to be applied. However, since the temperature of the polymerization reaction affects an amount of elution of ethylene alpha-olefin copolymer in TGIC analysis, performing the polymerization reaction at 130 to 160°C is desirable. When the temperature is lower than 130°C or higher than 160°C, polymerization activity decreases, which is not desirable.

Meanwhile, the pressure condition for the polymerization reaction may be determined in consideration of the efficiency of the polymerization reaction depending on the type of reaction and the type of reactor to be applied, and the pressure may be 1 to 3000 atm, or 1 to 1000 atm, or 1 to 100 atm, preferably 5 to 50 atm.

The ethylene alpha-olefin copolymer of the present invention is prepared through the method for preparing an ethylene alpha-olefin copolymer.

The ethylene alpha-olefin copolymer prepared through the above method uses one type of metallocene catalyst, but an ethylene alpha-olefin copolymer having two chains with different short chain branch contents is produced due to a catalyst isomer. It is determined that this is because, in the transition metal compound used as the main catalyst in the

present invention, as two different steric compounds, the R-type steric compound and the S-type steric compound are co-present in one transition metal, as described above, the transition metal compound of the S-type steric compound forms a polymer chain having a high short chain branch content, and the transition metal compound of the R-type steric compound forms a polymer chain having a low short chain branch content.

Therefore, the ethylene alpha-olefin copolymer of the present invention has two chain structures with different short chain branch contents, which indicates the number of carbon atoms attached to the side chain, and contains a polymer chain having a high short chain branch content, which is an amorphous or low-crystalline region, and a polymer chain having a low short chain branch content. Low-temperature impact strength and tensile elongation may be improved by the amorphous or low-crystalline polymer chain having high short chain branch content. Meanwhile, as the amorphous or low-crystalline region increases, physical properties such as tensile strength and shrinkage may be degraded. However, the polymer chain having low short chain branch content is present along, which contributes to improving the physical properties such as tensile strength and shrinkage. Therefore, the ethylene alpha-olefin copolymer of the present invention has improved low-temperature impact strength and also has improved physical properties such as tensile elongation, tensile strength, and shrinkage.

The ethylene alpha-olefin copolymer of the present invention has two peaks when analyzed by Thermal Gradient Interaction Chromatography (TGIC) because it is eluted at two different temperatures due to a difference in elution temperature between the amorphous or low-crystalline polymer chain having high short chain branch content and the polymer chain having low short chain branch content.

When the ethylene alpha-olefin-based copolymer of the present invention has two or more elution peaks that are clearly distinguished in a temperature range of 250 K to 430 K when analyzed Thermal Gradient Interaction Chromatography (TGIC).

For example, the ethylene alpha-olefin copolymer according to the present invention may exhibit a bimodal type of elution pattern in the TGIC analysis, which indicates the presence of two types of chains with different compositions.

Specifically, the ethylene alpha-olefin copolymer according to the present invention includes both a chain having high comonomer content and a chain having low comonomer content, and thus exhibits a bimodal type of elution pattern in the TGIC analysis.

In addition, the ethylene alpha-olefin copolymer exhibits physical properties within a range similar to those of typical ethylene alpha-olefin copolymers, and specifically, may have a density of 0.850 to 0.920 g/mL, and a melting index (MI) of 0.1 to 50 g/10 min.

In addition, the ethylene alpha-olefin copolymer may have a weight average molecular weight (Mw) of 10,000 to 1,000,000 g/mol, preferably 50,000 to 950,000 g/mol, or 50,000 to 800,000 g/mol, and more preferably 100,000 to 300,000 g/mol.

In addition, the ethylene alpha-olefin copolymer may have a molecular weight distribution (Mw/Mn) of 1 to 10, preferably 1.5 to 8, and more preferably 1.5 to 3.

In addition, the ethylene alpha-olefin copolymer may have a density of 0.857 to 0.903 g/mL.

The resin composition including the ethylene alpha-olefin copolymer according to the present invention and a polyolefin may have high impact strength, particularly high low-temperature impact strength, and low shrinkage without degradation in tensile strength and tensile elongation.

More specifically, the resin composition of the present invention includes 10 to 30 wt% of the ethylene alpha-olefin copolymer of the present invention, 40 to 80 wt% of the polyolefin, and 10 to 30 wt% of an inorganic filler, with respect to a total weight of the resin composition.

The inorganic filler may improve the rigidity and dimensional stability of a molded article using the resin composition. The inorganic filler may be, for example, in the form of fine particles or flakes. Non-limiting examples thereof may include mica, quartz powder, titanium dioxide, silicate, and aluminosilicate. In addition, for example, chalk, wollastonite, montmorillonite, especially ion-exchange modified organo-philic forms of montmorillonite, talc, kaolin, zeolite, vermiculite, aluminum oxide, silica, magnesium hydroxide, aluminum hydroxide, glass flakes, and the like may be used. In addition, a mixture of different inorganic fillers may be used. Preferred examples may include talc, mica, and a combination thereof. In an embodiment, the inorganic filler may be talc.

As the type of polyolefin resin, at least one selected from the group consisting of a random copolymer resin prepared by polymerizing one monomer selected from the group consisting of propylene, ethylene, butylene, and octane, a block copolymer resin in which ethylene-propylene rubber is blended with polypropylene, a copolymer resin of polyethylene, ethylene vinyl acetate, and a-olefin, and a homo polypropylene resin may be used. However, examples of usable polyolefin resins are not limited thereto.

In addition, the ethylene alpha-olefin copolymer may have a tensile elongation of 100 to 1000% and a tensile strength of 0.1 to 100 MPa.

A polypropylene resin composition may be prepared by mixing and blending the ethylene alpha-olefin copolymer of the present invention with a polypropylene resin, and when a molded article is produced using the polypropylene resin composition, the molded article thus obtained has excellent tensile elongation, tensile strength, and shrinkage characteristics as well as excellent low-temperature impact strength.

Hereinafter, the present invention will be described in more detail through specific embodiments. Examples shown below are illustrated only for the understanding of the inventive concept, and the scope of the inventive concept is not limited thereto.

## MODE FOR CARRYING OUT THE INVENTION

### Example

### 1. Synthesis Example - Synthesis of Transition Metal Compounds

### Synthesis Example 1

A transition metal compound (2) to be used as a main catalyst was synthesized from a compound (1) according to the following Reaction Formula 2. A specific synthesis process is as follows.

[Reaction Formula 2]

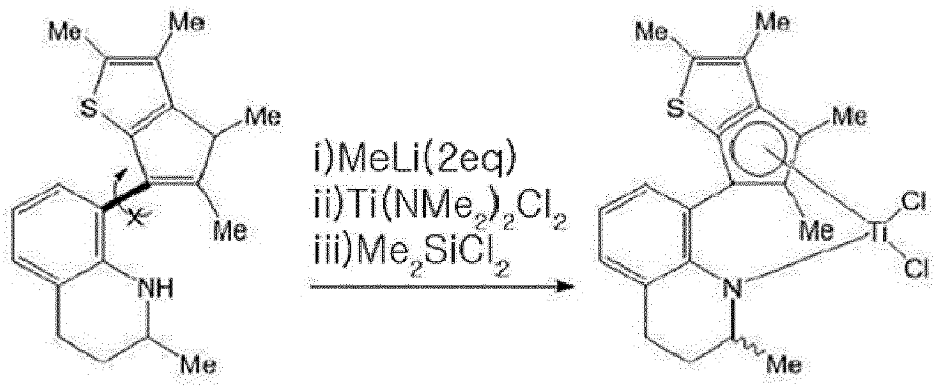


Compound (1) Compound (2)

First, 1.63 g (3.55 mmol, 1.6 M diethyl ether solution) of methyllithium was added dropwise to 10 mL of a diethyl ether solution in which 0.58 g (1.79 mmol) of a compound (1) was dissolved at -30°C (step i) .

The solution obtained in step i was stirred at room temperature overnight, the temperature was lowered to -30°C, and then, 0.37 g (1.79 mmol) of $Ti(NMe_2)_2Cl_2$ was added at once (step ii) .

The solution obtained in step ii was stirred for 3 hours and then the solvent was completely removed using a vacuum pump to obtain a solid product. Consequently, a red solid compound (2) was obtained (0.59 g, yield: 75%) (step iii).

It was determined through $^1H$ NMR spectrum that the compound (2) has S-type and R-type isomers, and these two steric compounds are present.

$^1H$ NMR ($C_6D_6$): d 7.12 and 7.09 (d, J = 7.2 Hz, 1H), 6.96 and 6.94 (d, J = 7.2 Hz, 1H), 6.82 and 6.80 (t, J = 7.2Hz, 1H),6.47 and 6.46 (d, J = 7.2Hz, 1H), 6.45 and 6.44 (d, J = 7.2Hz, 1H), 5.44 (m, 1H, NCH), 2.76-2.60 (m, 1H, $CH_2$), 2.44-2.18 (m, 1H, $CH_2$), 2.28 and 2.22 (s, 3H), 2.09 (s, 3H), 1.74 and 1.65 (s, 3H), 1.88-1.48 (m, 2H, $CH_2$), 1.20 and 1.18 (d, J = 7.2 Hz, 3H), 0.77 and 0.71 (s, 3H, TiMe), 0.49 and 0.40 (s, 3H, TiMe) ppm.

$^{13}C\{1H\}$ NMR ($C_6D_6$): d 159.83, 159.52, 145.93, 144.90, 140.78, 139.93, 139.21, 138.86, 135.26, 131.56, 129.69, 129.57, 127.50, 127.46, 127.38, 127.24, 121.29, 121.16, 120.05, 119.96, 118.90, 118.74, 117.99, 117.74, 113.87, 110.38, 57.91, 55.31, 54.87, 51.68, 50.27, 50.12, 34.77, 27.58, 27.27, 23.10, 22.05, 20.31, 19.90, 16.66, 14.70, 13.11, 12.98, 12.68 ppm. Anal. Calc. ($C_{22}H_{27}NSTi$): C, 68.56; H, 7.06; N, 3.63. Found: C, 68.43; H, 7.24; N, 3.52%.

### Synthesis Example 2

Synthesis was performed through the same process as in Synthesis Example 1, except that the solid product obtained in step iii) was dissolved in 8 mL of toluene, and 1.16 g (8.96 mmol) of $Me_2SiCl_2$ was added (step iii-1).

The solution obtained in step iii-1) was stirred at 80°C for 3 days, and then the solvent was removed using a vacuum pump. Consequently, a red solid compound (2) was obtained (0.59 g, yield: 75%).

It was determined through $^1H$ NMR spectrum that two steric compounds are present in a ratio of 2:1 with respect

to the obtained red solid compound.

$^1H$ NMR ($C_6D_6$): δ 7.10 (t, J = 4.4 Hz, 1H), 6.90 (d, J = 4.4 Hz, 2H), 5.27 and 5.22 (m, 1H, NCH), 2.54-2.38 (m, 1H, $CH_2$), 2.20-2.08 (m, 1H, $CH_2$), 2.36 and 2.35 (s, 3H), 2.05 and 2.03 (s, 3H), 1.94 and 1.93 (s, 3H), 1.89 and 1.84 (s, 3H), 1.72-1.58 (m, 2H, $CH_2$), 1.36-1.28 (m, 2H, $CH_2$), 1.17 and 1.14 (d, J = 6.4, 3H, $CH_3$) ppm.

$^{13}C\{^1H\}$ NMR ($C_6D_6$): 162.78, 147.91, 142.45, 142.03, 136.91, 131.12, 130.70, 130.10, 128.90, 127.17, 123.39, 121.33, 119.87, 54.18, 26.48, 21.74, 17.28, 14.46, 14.28, 13.80, 13.27 ppm.

The S-type and R-type isomers of compound (2) obtained in Synthetic Examples 1 and 2 have the following structures. As such, when the transition metal compound of compound (2) is used as a catalyst, the ethylene conversion rate varies depending on the steric structure of compound (2), and accordingly, two types of polymer chains with different comonomer contents may be formed.

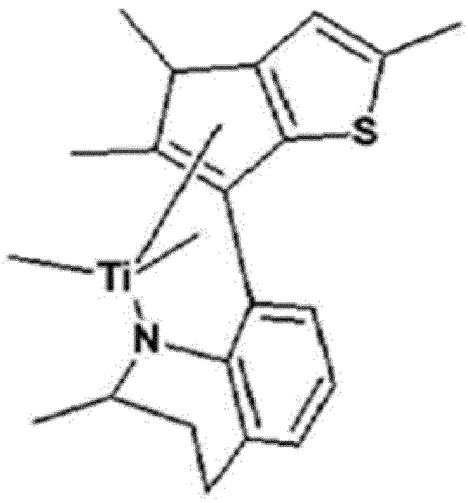
(a) S-type

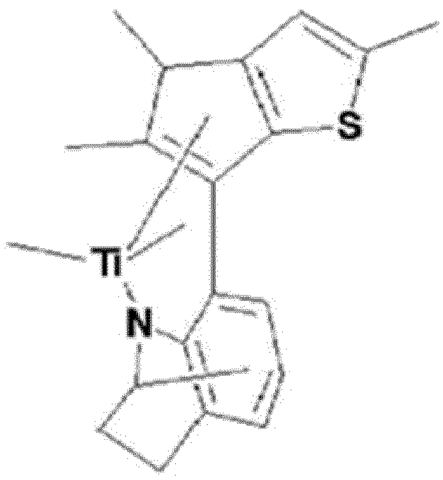
(b) R-type

**2. Preparation of ethylene alpha-olefin copolymer**

**(1) Preparation of ethylene alpha-olefin copolymer using compound (2) obtained in Synthesis Example 1**

**Example 1**

The inside of a high-pressure reactor (internal capacity: 2.8 L, stainless steel) was purged with nitrogen at room temperature, 1 L of n-hexane and 2.0 mmol of triisobutylaluminum were added, and 121.5 g of 1-butene purified over alumina was added. Subsequently, 135.0 g of ethylene gas (1-butene/ethylene input ratio of 0.9 by weight) was injected, and then the reactor temperature was preheated to 158°C.

A solution of 45.0 μmol of a dimethylanilinium tetrakis(pentafluorophenyl)borate cocatalyst was mixed with a mixed solution containing 7.5 μmol of the solid transition metal compound synthesized in Synthesis Example, and 187.5 μmol of triisobutyl aluminum, the mixture was injected into the reactor, and then a polymerization reaction was performed for 5 minutes.

After the polymerization reaction was completed, the temperature was lowered to room temperature, excess ethylene was discharged, and the copolymer dispersed in the solvent was dried in a vacuum oven at 80°C.

**Example 2**

A copolymer was prepared by performing a polymerization reaction in the same manner as in Example 1, except that 135 g of 1-butene and 135.0 g of ethylene gas (1-butene/ethylene input ratio of 1.0 by weight) were injected and the reactor temperature was preheated to 152°C.

**Example 3**

A copolymer was prepared by performing a polymerization reaction in the same manner as in Example 1, except

that 162 g of 1-butene and 135.0 g of ethylene gas (1-butene/ethylene input ratio of 1.2 by weight) were injected and the reactor temperature was preheated to 135°C.

**Comparative Example 1**

A commercially available ethylene-1-butene copolymer (LG Chem, Ltd., LC565) was used.

The physical properties of Examples 1 to 3 and Comparative Example 1 were measured, and the results are shown in Table 1.

In this case, 60 wt% of polypropylene (Lotte Chemical Corporation, JM-380), 20 wt% of the ethylene alpha-olefin copolymer of Examples 1 to 3 or Comparative Example 1, and 20 wt% of talc were blended using a tumbler mixer and extruded in a temperature range of 190 to 230°C in a single-screw extruder with an L/D of 35 and a diameter of 40 mm to prepare a resin composition in pellet form. Physical property specimens were prepared by molding the prepared resin composition 1 in pellet form in a temperature range of 190 to 240°C using an injection molding machine.

[Table 1]

| | | | Example 1 | Example 2 | Example 3 | Comparative Example 1 |
|---|---|---|---|---|---|---|
| Reaction conditions | Polymerization reaction temperature (°C) | | 158 | 152 | 135 | - |
| | Input weight ratio of 1-butene/ethylene | | 0.9 | 1.0 | 1.2 | - |
| Copolymer Low temperature TGIC analysis results | First elution temperature (K) | | 333 | 323 | 313 | 348 |
| | First elution polymer | Elution amount (wt%) | 12.5 | 12.0 | 11.8 | 30.8 |
| | | SCB ($CH_3$/1000 C) | 80.0 | 87.2 | 94.5 | 70.8 |
| | | Mw | 79,556 | 82, 009 | 86, 692 | 89,332 |
| | Second elution temperature (K) | | 368 | 363 | 353 | |
| | Second elution polymer | Elution amount (wt%) | 10.4 | 12.4 | 11.2 | - |
| | | SCB ($CH_3$/1000 C) | 47.1 | 50.9 | 56.8 | - |
| | | Mw | 90, 867 | 89, 609 | 77,260 | - |
| | 1st elution temperature/2nd elution temperature | | 0.905 | 0.900 | 0.887 | - |
| | 1st elution amount/2nd elution amount | | 1.202 | 0.968 | 1.054 | - |
| Resin composition Basic properties | Density (g/cm$^3$) | | 0.865 | 0.866 | 0.865 | 0.865 |
| | MI (g/10 min) | | 5.4 | 5.0 | 5.0 | 5.0 |
| | 1-butene content (wt%) | | 29.9 | 31.7 | 35.2 | 26.7 |
| | Tensile elongation (%) | | 1000 | 1000 | 1000 | 550 |
| | Tensile strength (MPa) | | 2.0 | 2.1 | 2.2 | 1.9 |
| Resin composition Processing properties | Impact strength (23°C, J/m) | | 313.79 | 362.82 | 365.54 | 303. 99 |
| | Impact strength (-10°C, J/m) | | 79.43 | 98.00 | 121.59 | 75.51 |
| | Impact strength (-30°C, J/m) | | 29.38 | 30.40 | 32.36 | 28.44 |
| | Heat deflection temperature (°C) | | 114.5 | 117.1 | 120.9 | 111.0 |
| | Shrinkage (mm/1000 mm) | | 7.4 | 7.3 | 7.2 | 8.6 |

Examples 1, 2, and 3 are polyolefin copolymers having different 1-butene contents at the same density and showing two elution amounts.

In Example 3, it is determined that the first elution temperature decreased as the 1-butene content increased, and the polymer detected at that temperature showed high short chain branch (SCB) and high Mw. Consequently, higher 1-butene content results in a polymer composed of low density and high molecular weight, which may compensate for the strength properties that may decrease at low density with high molecular weight, thereby improving tensile strength and impact strength while maintaining tensile elongation. Under the conditions of Example 3, it is interpreted that the [S-type] catalyst having a relatively high comonomer conversion rate is stabilized, resulting in the formation of a low-density, high molecular weight polymer chain due to long lifetime.

These results are attributed to the preparation of the copolymer under a catalyst containing compound (2), which, having R-type and S-type isomers as shown below, enables the preparation of an ethylene alpha-olefin copolymer having two chains with different short chain branch contents due to catalyst isomers. Consequently, when the ethylene alpha-olefin copolymer prepared in the present invention is analyzed by low-temperature Thermal Gradient Interaction Chromatography (TGIC), it is determined that it eluted at two different temperatures, thereby forming two chain structures with different short chain branch contents.

**(2) Preparation of ethylene alpha-olefin copolymer using compound (2) obtained in Synthesis Example 2**

**Examples 4 to 6**

The inside of a high-pressure reactor (internal capacity: 2 L, stainless steel) was purged with nitrogen at room temperature, and 1 L of n-hexane and 2 mL of triisobutylaluminum were added. Subsequently, 210 ml of 1-octene and a controlled input amount of ethylene gas were injected, the reactor temperature was preheated to 140°C, a solution of 45.0 μmol of a dimethylanilinium tetrakis(pentafluorophenyl)borate cocatalyst was mixed with a mixed solution of 1.5 μmol of the synthesized transition metal compound (2) and 187.5 μmol of triisobutyl aluminum, the mixture was injected into the reactor, and then a polymerization reaction was performed for 5 minutes.

After the polymerization reaction was completed, the reaction was terminated using ethanol diluted with 10% HCl, the temperature was lowered to room temperature, and excess gas was discharged. Subsequently, the polymerization solution of the copolymer dispersed in the solvent was transferred to a container and dried in a vacuum oven at 80°C for 15 hours or longer to prepare an ethylene/1-octene copolymer with varying S-type and R-type ratios through catalyst recrystallization, and the results are shown in Table 2.

[Table 2]

| | S type/S type + R type ratio | Te-1 area ratio (%) | Te-2 area ratio (%) | Density (g/ml) | 1-octene content (wt%) | Comonomer conversion rate (%) |
|---|---|---|---|---|---|---|
| Example 4 | 0.57 | 55.2 | 41.8 | 0.871 | 37.3 | 22.9 |
| Example 5 | 0.70 | 64.4 | 34.9 | 0.870 | 37.4 | 23.1 |
| Example 6 | 0.91 | 84.7 | 11.7 | 0.861 | 43.0 | 32.1 |

As seen from Table 2, it is determined that as the ratio of the S-type steric compound in the transition metal compound, which is the main catalyst used in Examples 4 to 6, increases, an ethylene-alpha olefin copolymer in which the area ratio of the first fraction (polymer chain having high short chain branch content) is greater than the area ratio of the second fraction (polymer chain having low short chain branch content) is obtained.

Meanwhile, the ratio obtained from the Te-1 area ratio/Te-2 area ratio in Table 2 corresponds to a ratio of an amount of elution at the first elution temperature/an amount of elution at the second elution temperature.

It is considered that although it is a single catalyst, the polymer properties may be controlled through the adjustment of the polymer structure produced according to the ratio control of the S-type and R-type due to the presence of isomers.

**Examples 7 and 8**

The inside of a high-pressure reactor (internal capacity: 2 L, stainless steel) was purged with nitrogen at room temperature, and 1 L of n-hexane and 2 mL of triisobutylaluminum were added. Subsequently, the controlled amounts of 1-butene and ethylene gas were injected, the reactor temperature was preheated to 140°C, a solution of 45.0 μmol of a dimethylanilinium tetrakis(pentafluorophenyl)borate cocatalyst was mixed with a mixed solution of 1.5 μmol of the synthesized transition metal compound (2) and 187.5 μmol of triisobutyl aluminum, the mixture was injected into the reactor, and then a polymerization reaction was performed for 5 minutes.

After the polymerization reaction was completed, the reaction was terminated using ethanol diluted with 10% HCl, the temperature was lowered to room temperature, and excess gas was discharged. Subsequently, the polymerization solution of the copolymer dispersed in the solvent was transferred to a container and dried in a vacuum oven at 80°C for 15 hours or longer to prepare an ethylene-1-butene copolymer.

The physical properties of each ethylene-1-butene copolymer prepared above were measured, and the results are shown in Table 3.

**Comparative Example 2**

The ethylene-1-butene copolymer (LC175) commercially produced by LG Chem, Ltd. was purchased, and the physical properties thereof were measured. The results are shown in Table 3.

[Table 3]

| | | Example 7 | Example 8 | Comparative Example 1 | Comparative Example 2 |
|---|---|---|---|---|---|
| Copolymer Physical properties | Density (g/mL) | 0.865 | 0.870 | 0.865 | 0.870 |
| | MI (q/10 min.) | 5.0 | 1.1 | 5.0 | 1.1 |
| | Mwd | 2.7 | 2.5 | 2.6 | 2.3 |
| | 1-butene content (wt%) | 32.3 | 27.9 | 27.3 | 24.4 |
| | Tm-1 (°C) | 52.5 | 58.4 | 31.6 | 43.1 |
| | Tm-2 (°C) | 112.7 | 114.1 | - | - |
| | Tensile elongation | >1000% | >1000% | 583% | 665% |
| | Tensile strength (MPa) | 2.8 | 6.8 | 1.8 | 3.4 |
| TGIC analysis results | Te-1 (°C) | 45.7 | 50.2 | 57.5 | 63.8 |
| | Comonomer content (wt%) | 31.6 | 31.2 | 27.3 | 24.4 |
| | Te-2 (°C) | 81.7 | 85.5 | - | - |
| | Comonomer content (wt%) | 16.4 | 20.1 | - | - |

As seen from Table 3, the ethylene alpha-olefin copolymers of Examples 7 and 8 were found to have a first fraction (polymer chain having high short chain branch content) and a second fraction (polymer chain having low short chain branch content) defined by clearly distinguishable first and second peaks in the TGIC analysis results.

In addition, it is seen that, since a fraction ratio of the first peak area is larger than that of the second peak area and an average SBC content of the first peak area is high, more comonomers were introduced into the first peak area compared to the second peak area.

It is determined that the transition metal compound, the main catalyst used in Examples 7 and 8, served as two catalysts with different structures, having R-type and S-type steric compounds, resulting in formation of a polymer chain having a low elution temperature, high short chain branch content, and a high molecular weight and a polymer chain having low short chain branch content and a low molecular weight.

Such a difference in short chain branch content also causes a difference in crystallinity. The polymer chain having a high short chain branch content is amorphous or has low crystallinity, while the chain having low short chain branch content has high crystallinity. This may mean that two types of chains with a large difference in crystallinity due to a difference in short chain branch content are included together in the copolymer of Examples above.

**3. Analysis of physical properties of copolymers and resin compositions**

**(1) Density (g/mL)**

Sheets with a thickness of 3 mm and a radius of 2 cm were prepared from the antioxidant-treated copolymer using a compression mold at 180°C, cooled to room temperature, and measured according to ASTM D-792 (manufacturer: Toyoseiki, model name: T-001).

**(2) Melt index (MI)**

Melt index was measured according to ASTM D-1238 (condition E, 190°C, 2.16 kg load) (manufacturer: Mirage, model name: SD-120L).

**(3) Low-temperature Thermal Gradient Interaction Chromatography (TGIC) analysis**

Copolymers were dissolved in 1,2,4-trichlorobenzene, injected into a device (manufacturer: PolymerChar, model name: CFC), and then eluted through a GPC column at a flow rate of 1 ml/min with the temperature raised from 250 K to 430 K in 5°C increments. Using an infrared detector, the polymer quantity, short chain branch (SCB) degree, and Mw were measured at each temperature.

**(4) Tensile elongation**

Tensile elongation was measured using a universal testing machine (INSTRON 4466) according to a method of ASTM D638.

**(5) Tensile strength**

Tensile strength was measured using a universal testing machine (INSTRON 4466) according to a method of ASTM D638.

**(6) IZOD impact strength (23°C)**

Notched impact strength of 1/8" specimens was measured at 23°C according to a method of ASTM D256.

**(7) IZOD impact strength (-10°C)**

Notched impact strength of 1/8" specimens was measured at -10°C according to a method of ASTM D256.

**(8) IZOD impact strength (-30°C)**

Notched impact strength of 1/8" specimens was measured at -30°C according to a method of ASTM D256.

**(9) Molecular weight distribution (Mwd)**

Molecular weight distribution was measured at 160°C using a 1,2,4-trichlorobenzene solvent through a Gel Permeation Chromatography (GPC) (apparatus name: PL-GPC220, manufacturer: Agilent) analysis method.

**(10) Melting point (Tm)**

A Differential Scanning Calorimeter (DSC, apparatus name: DSC 2920, manufacturer: TA) was used Melting point was measured using DSC by equilibrating at 0°C, then heating to 200°C at a rate of 10°C/min, cooling to -90°C at a rate of 10°C/min, and then reheating to 200°C at a rate of 10°C/min. The melting point is obtained by taking the peak area of the endothermic curve during the second temperature rise.

**(11) Comonomer content (wt%)**

Comonomer content was analyzed by $^1$H NMR (apparatus name: Avance DRX400, manufacturer: Bruker).

**(12) TGIC analysis**

Cross-Fractionation Chromatography (CFC) equipment available from Polymer Char was used, and the specimen to be analyzed was stirred at 150°C for 60 minutes to dissolve 1,2,4-trichlorobenzene (2.5 mg/mL), and then, the dissolved specimen was introduced into Thermal Gradient Interaction Chromatography (TGIC) column at 1 ml/min and then stabilized at 150°C for 20 minutes. Thereafter, the TGIC column was cooled to 35°C at a cooling rate of 20°C/min. The temperature was raised from 35°C to 130°C in 5°C increments, and elution was performed with a GPC column at a flow rate of 1 ml/min. The elution time in this case was 5 minutes, and the analysis time for each fraction was 20 minutes. After

passing through the GPC column, an infrared detector (IR5) was used to determine the elution amount for each temperature fraction, the molecular weight and short chain branch distribution of the polymer corresponding to each fraction. The peak area of each fraction was checked using the analysis software "CFC calc", and in this case, n-heptane was used as an internal standard.

S type/S type + R type ration, S type:R type molar ratio, Te-1 area ratio (%), and Te-2 area ratio (%) of the copolymers obtained in Examples 1 to 8 of the present invention are summarized and shown in Table 4 below.

[Table 4]

| | S type/S type + R type ratio | S type:R type (molar ratio) | Te-1 area ratio (%) | Te-2 area ratio (%) |
|---|---|---|---|---|
| Example 1 | 0.56 | 1.25:1 | 54 | 45 |
| Example 2 | 0.56 | 1.25:1 | 48.7 | 50.3 |
| Example 3 | 0.56 | 1.25:1 | 50.8 | 48.2 |
| Example 4 | 0.57 | 1.3:1 | 55.2 | 41.8 |
| Example 5 | 0.70 | 2.33:1 | 64.4 | 34.9 |
| Example 6 | 0.91 | 10.11:1 | 84.7 | 11.7 |
| Example 7 | 0.56 | 1.25:1 | 55.3 | 44.7 |
| Example 8 | 0.56 | 1.25:1 | 52.9 | 47.1 |

Although embodiments of the present invention are described in detail, the scope of the present invention is not limited to the embodiments, and it will be apparent to those skilled in the art that various modifications and changes may be made thereto without departing from the technical spirit of the present invention described in the claims.

## Claims

1. An ethylene alpha-olefin-based copolymer comprising an ethylene structural unit and an alpha-olefin structural unit, wherein the ethylene alpha-olefin-based copolymer comprises at least two different elution peaks in a temperature range of 250 K to 430 K in Thermal Gradient Interaction Chromatography (TGIC) analysis.

2. The ethylene alpha-olefin copolymer of claim 1, wherein the ethylene alpha-olefin copolymer comprises a first elution temperature and a second elution temperature in Thermal Gradient Interaction Chromatography (TGIC) analysis when including the at least two different elution peaks, and a difference between the first elution temperature and the second elution temperature is 10 to 60 K.

3. The ethylene alpha-olefin copolymer of claim 2, wherein the first elution temperature is 310 to 345 K, and the second elution temperature is 350 to 380 K.

4. The ethylene alpha-olefin copolymer of claim 2, wherein a ratio of the first elution temperature and the second elution temperature is 0.5 to 0.91.

5. The ethylene alpha-olefin copolymer of claim 2, wherein a ratio of an amount of elution at the first elution temperature to an amount of elution at the second elution temperature is 0.5 to 7.3.

6. The ethylene alpha-olefin copolymer of claim 1, wherein the ethylene alpha-olefin copolymer has a density of 0.857 to 0.903 g/ml.

7. A method for preparing the ethylene alpha-olefin copolymer of any one of claims 1 to 6, the method comprising polymerizing ethylene and at least one olefin-based monomer in the presence of a main catalyst compound containing a transition metal compound represented by Formula 1 below and at least one cocatalyst compound selected from compounds represented by Formulas 2 to 4 below:

[Formula 1]

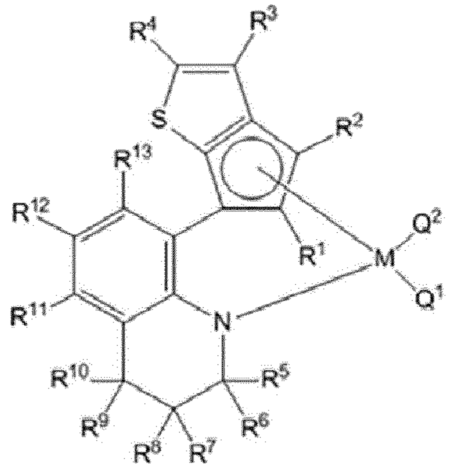

wherein in Formula 1 above,

M is a Group 4 transition metal,

$Q^1$ and $Q^2$ are each independently halogen, $(C_1\text{-}C_{20})$alkyl, $(C_2\text{-}C_{20})$alkenyl, $(C_2\text{-}C_{20})$alkynyl, $(C_6\text{-}C_{20})$aryl, $(C_1\text{-}C_{20})$alkyl $(C_6\text{-}C_{20})$aryl, $(C_6\text{-}C_{20})$aryl $(C_1\text{-}C_{20})$alkyl, $(C_1\text{-}C_{20})$alkylamido, $(C_6\text{-}C_{20})$arylamido, or $(C_1\text{-}C_{20})$alkylidene,

$R^1$, $R^2$, $R^3$, $R^4$, $R^5$, $R^6$, $R^7$, $R^8$, $R^9$, and $R^{10}$ are each independently hydrogen; $(C_1\text{-}C_{20})$alkyl with or without an acetal, ketal, or ether group; $(C_2\text{-}C_{20})$alkenyl with or without an acetal, ketal, or ether group; $(C_1\text{-}C_{20})$alkyl$(C_6\text{-}C_{20})$aryl with or without an acetal, ketal, or ether group; $(C_6\text{-}C_{20})$aryl$(C_1\text{-}C_{20})$alkyl with or without an acetal, ketal, or ether group; or $(C_1\text{-}C_{20})$alkylsilyl with or without an acetal, ketal, or ether group, where $R^1$ and $R^2$ may be connected to form a ring, $R^3$ and $R^4$ may be connected to form a ring, and at least two of $R^5$ to $R^{10}$ may be connected to form a ring, and

$R^{11}$, $R^{12}$, and $R^{13}$ are each independently hydrogen; $(C_1\text{-}C_{20})$alkyl with or without an acetal, ketal, or ether group; $(C_2\text{-}C_{20})$alkenyl with or without an acetal, ketal, or ether group; $(C_1\text{-}C_{20})$alkyl$(C_6\text{-}C_{20})$aryl with or without an acetal, ketal, or ether group; $(C_6\text{-}C_{20})$aryl$(C_1\text{-}C_{20})$alkyl with or without an acetal, ketal, or ether group; $(C_1\text{-}C_{20})$alkylsilyl with or without an acetal, ketal or ether group; $(C_1\text{-}C_{20})$alkoxy; or $(C_6\text{-}C_{20})$aryloxy, where $R^{11}$ and $R^{12}$ or $R^{12}$ and $R^{13}$ may be connected to form a ring,

[Formula 2] $-[Al(Ra)\text{-}O]_n-$

wherein in Formula 2 above,

Ra is each independently halogen; or a $(C_1\text{-}C_{20})$ hydrocarbyl group unsubstituted or substituted with halogen, and

n is an integer of 2 or greater,

[Formula 3] $Q(Rb)_3$

wherein in Formula 3 above,

Q is aluminum or boron, and

Rb is each independently halogen; or a $(C_1\text{-}C_{20})$ hydrocarbyl group unsubstituted or substituted with halogen, and

[Formula 4] $[W]^+[Z(Rc)_4]^-$

wherein in Formula 4 above,

$[W]^+$ is a cationic Lewis acid or a cationic Lewis acid to which a hydrogen atom is bonded,

Z is a Group 13 element, and

Rc is each independently a ($C_6$-$C_{20}$) aryl group substituted with one or two or more substituents selected from the group consisting of halogen, a ($C_1$-$C_{20}$) hydrocarbyl group, an alkoxy group, and a phenoxy group; or a ($C_1$-$C_{20}$) alkyl group substituted with one or two or more substituents selected from the group consisting of halogen, a ($C_1$-$C_{20}$) hydrocarbyl group, an alkoxy group, and a phenoxy group.

**8.** The method of claim 7, wherein R-type and S-type steric compounds are co-present in the transition metal compound.

**9.** A polypropylene resin composition comprising:

polypropylene; and
the ethylene alpha-olefin copolymer of any one of claims 1 to 6.

**10.** A molded article produced from the polypropylene resin composition of claim 9.

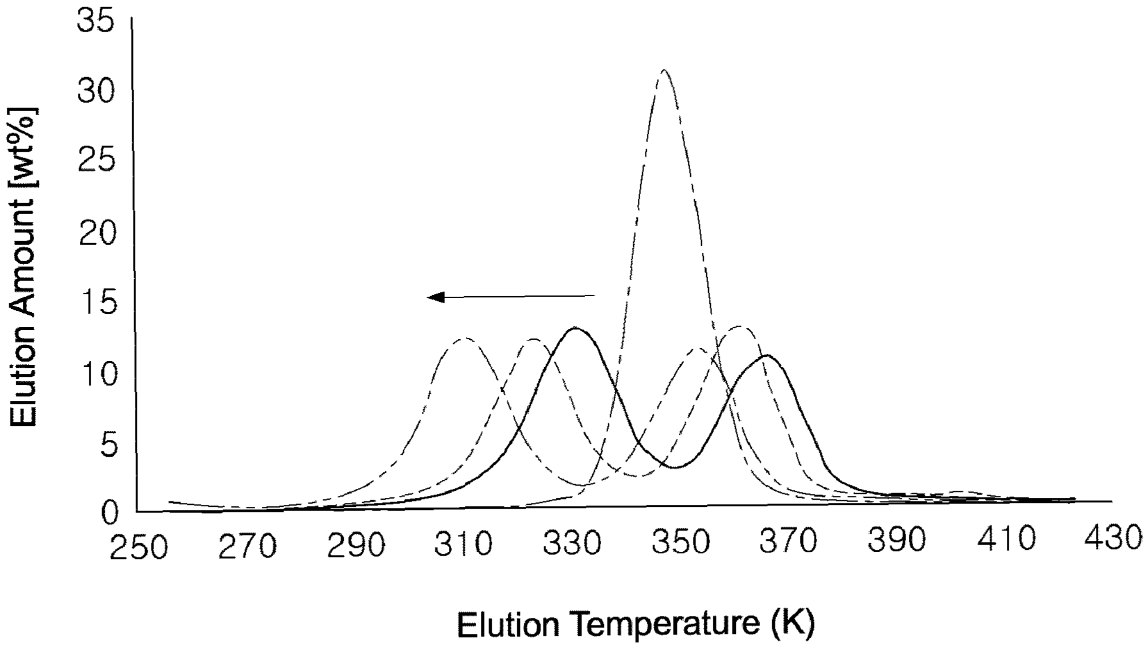
35
30
25
20
15
10
5
0
Elution Amount [wt%]
250
270
290
310
330
350
370
390
410
430
Elution Temperature (K)

FIG. 1

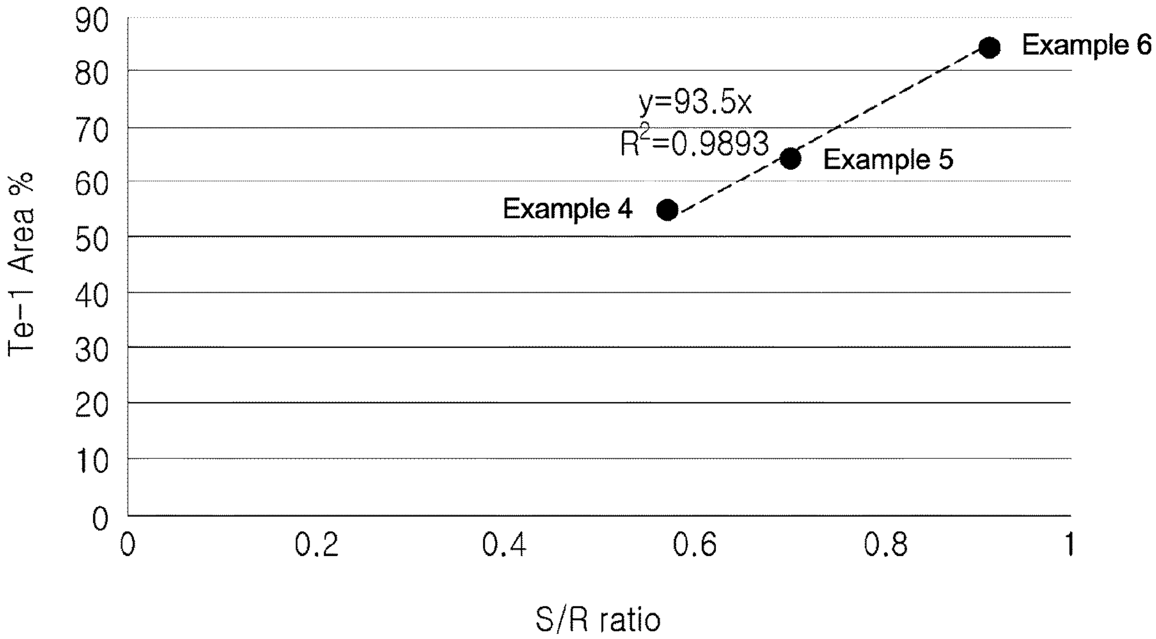
90
80
70
60
50
40
30
20
10
0
Te-1 Area %
0
0.2
0.4
0.6
0.8
1
S/R ratio
y=93.5x
R2=0.9893
Example 4
Example 5
Example 6

FIG. 2

## INTERNATIONAL SEARCH REPORT

International application No.
**PCT/KR2023/019165**

### A. CLASSIFICATION OF SUBJECT MATTER

**C08F 210/16**(2006.01)i; **C08F 4/6592**(2006.01)i; **C08F 4/649**(2006.01)i; **C08L 23/10**(2006.01)i; **C08L 23/08**(2006.01)i

According to International Patent Classification (IPC) or to both national classification and IPC

### B. FIELDS SEARCHED

Minimum documentation searched (classification system followed by classification symbols)

C08F 210/16(2006.01); B01J 31/12(2006.01); C07F 7/00(2006.01); C07F 7/28(2006.01); C08F 4/649(2006.01); C08K 3/013(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 에틸렌(ethylene), 알파올레핀(alpha-olefin), 열적구배상호작용 크로마토그래피(TGIC, Thermal Gradient Interaction Chromatography), 사이클로펜타디에닐(cyclopentadienyl), 촉매(catalyst), 조촉매(co-catalyst), 폴리프로필렌(polypropylene)

### C. DOCUMENTS CONSIDERED TO BE RELEVANT

| Category* | Citation of document, with indication, where appropriate, of the relevant passages | Relevant to claim No. |
|---|---|---|
| X | KR 10-2021-0067264 A (LOTTE CHEMICAL CORPORATION) 08 June 2021 (2021-06-08) See claims 1-5; and paragraphs [0028], [0029], [0114]-[0130], [0158], [0160] and [0161]. | 1-10 |
| X | PARK, J. H. et al. Preparation of half-metallocenes of thiophene-fused and tetrahydroquinoline-linked cyclopentadienyl ligands for ethylene/α-olefin copolymerization. Dalton transactions. 2010, vol. 39, pp. 9994-10002. See abstract; and pages 9995-9997 and 10001. | 1-8 |
| X | KR 10-2021-0067338 A (LOTTE CHEMICAL CORPORATION) 08 June 2021 (2021-06-08) See claims 1-7; and paragraphs [0119]-[0133], [0157] and [0160]. | 1-10 |
| X | WO 2011-129589 A2 (HONAM PETROCHEMICAL CORPORATION et al.) 20 October 2011 (2011-10-20) See pages 22, 24, 25 and 27-33; and claims 1-10. | 1-8 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 March 2024** | **07 March 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2023/019165**

**C. DOCUMENTS CONSIDERED TO BE RELEVANT**

| Category* | Citation of document, with indication, where appropriate, of the relevant passages | Relevant to claim No. |
|---|---|---|
| X | WO 2015-046705 A1 (LG CHEM, LTD.) 02 April 2015 (2015-04-02)<br>See paragraphs [0139], [0140] and [0155]; and claims 1-17. | 1-8 |

Form PCT/ISA/210 (second sheet) (July 2022)

**INTERNATIONAL SEARCH REPORT**
**Information on patent family members**

International application No.
**PCT/KR2023/019165**

| Patent document cited in search report | Publication date (day/month/year) | Patent family member(s) | Publication date (day/month/year) |
|---|---|---|---|
| KR 10-2021-0067264 A | 08 June 2021 | None | |
| KR 10-2021-0067338 A | 08 June 2021 | None | |
| WO 2011-129589 A2 | 20 October 2011 | CN 102834402 A | 19 December 2012 |
| | | CN 102834402 B | 19 August 2015 |
| | | CN 102834422 A | 19 December 2012 |
| | | CN 102834422 B | 18 March 2015 |
| | | CN 102844338 A | 26 December 2012 |
| | | CN 102844338 B | 25 March 2015 |
| | | CN 102858808 A | 02 January 2013 |
| | | CN 102858808 B | 01 April 2015 |
| | | CN 102892797 A | 23 January 2013 |
| | | CN 104672364 A | 03 June 2015 |
| | | EP 2559695 A2 | 20 February 2013 |
| | | EP 2559695 B1 | 14 June 2017 |
| | | EP 2559710 A2 | 20 February 2013 |
| | | EP 2559710 B1 | 13 July 2016 |
| | | EP 2559711 A2 | 20 February 2013 |
| | | EP 2559711 B1 | 14 June 2017 |
| | | EP 2559713 A2 | 20 February 2013 |
| | | EP 2559713 B1 | 10 August 2016 |
| | | EP 2559714 A2 | 20 February 2013 |
| | | EP 2559714 B1 | 10 August 2016 |
| | | ES 2596717 T3 | 11 January 2017 |
| | | ES 2596718 T3 | 11 January 2017 |
| | | ES 2596719 T3 | 11 January 2017 |
| | | JP 2013-523989 A | 17 June 2013 |
| | | JP 2013-523990 A | 17 June 2013 |
| | | JP 2013-527271 A | 27 June 2013 |
| | | JP 2013-528674 A | 11 July 2013 |
| | | JP 2013-529185 A | 18 July 2013 |
| | | JP 2015-131963 A | 23 July 2015 |
| | | JP 5468708 B2 | 09 April 2014 |
| | | JP 5546678 B2 | 09 July 2014 |
| | | JP 5567208 B2 | 06 August 2014 |
| | | JP 5567209 B2 | 06 August 2014 |
| | | JP 5771867 B2 | 02 September 2015 |
| | | JP 5984227 B2 | 06 September 2016 |
| | | KR 10-0986301 B1 | 07 October 2010 |
| | | KR 10-1384384 B1 | 10 April 2014 |
| | | KR 10-1384401 B1 | 25 April 2014 |
| | | KR 10-1384412 B1 | 25 April 2014 |
| | | KR 10-1384450 B1 | 25 April 2014 |
| | | KR 10-2011-0114473 A | 19 October 2011 |
| | | KR 10-2011-0114474 A | 19 October 2011 |
| | | KR 10-2011-0114475 A | 19 October 2011 |
| | | KR 10-2011-0114476 A | 19 October 2011 |
| | | KR 10-2013-0124269 A | 13 November 2013 |
| | | KR 10-2013-0124272 A | 13 November 2013 |
| | | KR 10-2013-0124273 A | 13 November 2013 |
| | | KR 10-2013-0135802 A | 11 December 2013 |

Form PCT/ISA/210 (patent family annex) (July 2022)

**INTERNATIONAL SEARCH REPORT**
**Information on patent family members**

International application No.
**PCT/KR2023/019165**

| Patent document cited in search report | Publication date (day/month/year) | Patent family member(s) | Publication date (day/month/year) |
|---|---|---|---|
| | | US 2013-0203949 A1 | 08 August 2013 |
| | | US 2013-0211020 A1 | 15 August 2013 |
| | | US 2013-0211021 A1 | 15 August 2013 |
| | | US 2013-0211023 A1 | 15 August 2013 |
| | | US 2013-0211024 A1 | 15 August 2013 |
| | | US 2015-0011770 A1 | 08 January 2015 |
| | | US 8889581 B2 | 18 November 2014 |
| | | US 8889804 B2 | 18 November 2014 |
| | | US 8912352 B2 | 16 December 2014 |
| | | US 8916662 B2 | 23 December 2014 |
| | | US 9062025 B2 | 23 June 2015 |
| | | US 9096575 B2 | 04 August 2015 |
| | | WO 2011-129589 A3 | 08 March 2012 |
| | | WO 2011-129590 A2 | 20 October 2011 |
| | | WO 2011-129590 A3 | 29 March 2012 |
| | | WO 2011-129590 A9 | 30 August 2012 |
| | | WO 2011-129592 A2 | 20 October 2011 |
| | | WO 2011-129592 A3 | 29 March 2012 |
| | | WO 2011-129593 A2 | 20 October 2011 |
| | | WO 2011-129593 A3 | 29 March 2012 |
| | | WO 2011-129594 A2 | 20 October 2011 |
| | | WO 2011-129594 A3 | 29 March 2012 |
| WO 2015-046705 A1 | 02 April 2015 | CN 104703994 A | 10 June 2015 |
| | | CN 104703994 B | 10 May 2017 |
| | | CN 105164139 A | 16 December 2015 |
| | | CN 105164139 B | 25 September 2018 |
| | | CN 105229039 A | 06 January 2016 |
| | | CN 105229039 B | 27 April 2018 |
| | | CN 105263940 A | 20 January 2016 |
| | | CN 105263940 B | 23 March 2018 |
| | | CN 109280119 A | 29 January 2019 |
| | | CN 109280119 B | 24 August 2021 |
| | | DE 202014011298 U1 | 08 March 2019 |
| | | EP 2873671 A1 | 20 May 2015 |
| | | EP 2873671 B1 | 04 July 2018 |
| | | EP 2975043 A1 | 20 January 2016 |
| | | EP 2975043 B1 | 19 September 2018 |
| | | EP 2980104 A1 | 03 February 2016 |
| | | EP 2980104 B1 | 04 November 2020 |
| | | EP 2982677 A1 | 10 February 2016 |
| | | EP 2982677 B1 | 01 August 2018 |
| | | JP 2015-533850 A | 26 November 2015 |
| | | JP 5972474 B2 | 17 August 2016 |
| | | KR 10-1528102 B1 | 10 June 2015 |
| | | KR 10-1577145 B1 | 11 December 2015 |
| | | KR 10-1585340 B1 | 14 January 2016 |
| | | KR 10-1603016 B1 | 11 March 2016 |
| | | KR 10-1681372 B1 | 01 December 2016 |
| | | KR 10-2015-0034592 A | 03 April 2015 |
| | | KR 10-2015-0034652 A | 03 April 2015 |

Form PCT/ISA/210 (patent family annex) (July 2022)

**INTERNATIONAL SEARCH REPORT**
**Information on patent family members**

International application No.
**PCT/KR2023/019165**

| Patent document cited in search report | Publication date (day/month/year) | Patent family member(s) | Publication date (day/month/year) |
|---|---|---|---|
| | | KR 10-2015-0034653 A | 03 April 2015 |
| | | KR 10-2015-0034654 A | 03 April 2015 |
| | | KR 10-2015-0034655 A | 03 April 2015 |
| | | US 2015-0094435 A1 | 02 April 2015 |
| | | US 2015-0361196 A1 | 17 December 2015 |
| | | US 2016-0046735 A1 | 18 February 2016 |
| | | US 2016-0272743 A1 | 22 September 2016 |
| | | US 9376519 B2 | 28 June 2016 |
| | | US 9481747 B2 | 01 November 2016 |
| | | US 9550848 B2 | 24 January 2017 |
| | | US 9683061 B2 | 20 June 2017 |
| | | WO 2015-046930 A1 | 02 April 2015 |
| | | WO 2015-046931 A1 | 02 April 2015 |
| | | WO 2015-046932 A1 | 02 April 2015 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20080065868
- US 4752597 A


### Non-patent literature cited in the description


- *Organometallics*, 2007, vol. 27, 6685
- *J. Organomet. Chem.*, 2005, vol. 690, 4213